(19) **Europäisches Patentamt / European Patent Office / Office européen des brevets**

(11) **EP 2 199 922 A1**

(12) **EUROPEAN PATENT APPLICATION**
published in accordance with Art. 153(4) EPC

(43) Date of publication:
**23.06.2010 Bulletin 2010/25**

(51) Int Cl.:
**G06F 17/14** (2006.01)

(21) Application number: **08792386.8**

(22) Date of filing: **12.08.2008**

(86) International application number:
**PCT/JP2008/064453**

(87) International publication number:
**WO 2009/022694 (19.02.2009 Gazette 2009/08)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.08.2007 JP 2007210946**
**06.08.2008 JP 2008203384**

(71) Applicants:
- **Kyoto University**
  **Kyoto-shi**
  **Kyoto 606-8501 (JP)**
- **National University Corporation**
  **Gunma University**
  **Gunma 371-0044 (JP)**

(72) Inventors:
- **FUJIWARA, Hiroshi**
  **Kyoto-shi**
  **Kyoto 606-8501 (JP)**
- **SAITOH, Saburou**
  **Kiryu-shi**
  **Gunma 376-8515 (JP)**
- **MATSUURA, Tsutomu**
  **Kiryu-shi**
  **Gunma 376-8515 (JP)**

(74) Representative: **HOFFMANN EITLE**
**Patent- und Rechtsanwälte**
**Arabellastrasse 4**
**81925 München (DE)**

(54) **INVERSE LAPLACE TRANSFORMATION PROGRAM, PROGRAM FOR CREATING TABLE FOR INVERSE LAPLACE TRANSFORMATION, PROGRAM FOR CALCULATING NUMERICAL SOLUTION OF INVERSE LAPLACE TRANSFORMATION, AND INVERSE LAPLACE TRANSFORMATION DEVICE**

(57)  A table forming unit (4) calculates, in a weighted reproducing kernel Hilbert space formed of an absolutely continuous function that is zero at an origin, solutions of simultaneous equations obtained by discretization of an integral equation of the second kind derived from Tikhonov regularization method with a weighted square integrable space used as an observation space, and forms an H table describing information including numerical solution of the integral equation of the second kind based on the solutions of the simultaneous equations. An inverse transform unit (5) obtains, by numerical calculation, an inner product, in the weighted square integrable space, of the numerical solution of the integral equation of the second kind and a Laplace transform image multiplied by a mollifier function with reference to the H table.

FIG.1

**Description**

TECHNICAL FIELD

The present invention relates to an inverse Laplace transform program, a program for forming a table for inverse Laplace transform, a program for calculating a numerical solution of inverse Laplace transform and an inverse Laplace transform device. More specifically, it relates to a technique of calculating a numerical solution of inverse Laplace transform using a reproducing kernel and a regularization method.

BACKGROUND ART

Inverse Laplace transform has wide applications in various fields including electrical and electronics engineering, oil well research and image processing. Conventionally, computer calculation of numerical solution of inverse Laplace transform utilizes a method of numerical calculation of complex integral or a method using a Laplace transform table. Such a conventional method, however, is numerically unstable as it involves calculation error such as rounding error and discretization error.

To overcome such numerically unstable, a method has been proposed, in which numerical solution of inverse Laplace transform is calculated based on the reproducing kernel and the regularization method (for example, see Matsuura et al., "Numerical Real Inversion Formulas of the Laplace Transform by Using a Fredholm Integral Equation of the Second Kind," The Mathematical Society of Japan, Annual Meeting 2007, Division of Applied Mathematics, Lecture Abstract pp. 69-72 (Non-Patent Document 1)). According to this method, the numerical solution of inverse Laplace transform can be calculated by best approximation function in a reproducing kernel Hilbert space.

Non-Patent Document 1: Matsuura et al., "Numerical Real Inversion Formulas of the Laplace Transform by Using a Fredholm Integral Equation of the Second Kind," The Mathematical Society of Japan, Annual Meeting 2007, Division of Applied Mathematics, Lecture Abstract pp. 69-72

DISCLOSURE OF THE INVENTION

PROBLEMS TO BE SOLVED BY THE INVENTION

The method using the reproducing kernel and the regularization method described above assumes a reproducing kernel space of absolutely continuous function, where the original function is zero at the origin and its derivative does not increase. This method is applicable only when the original function satisfies these two conditions.

Therefore, an object of the present invention is to provide an inverse Laplace transform program, a program for forming a table for inverse Laplace transform, a program for calculating a numerical solution of inverse Laplace transform and an inverse Laplace transform device, that can calculate numerical solution of inverse Laplace transform using the reproducing kernel and the regularization method even when the derivative of original function increases or if the original function is not zero at the origin.

MEANS FOR SOLVING THE PROBLEMS

According to an aspect, the present invention provides an inverse Laplace transform program, for calculating a numerical solution of an original function of a Laplace transform image under a given regularization parameter and mollifier parameter, causing a computer to execute the steps of: in a weighted reproducing kernel Hilbert space formed of an absolutely continuous function that is zero at an origin, calculating solutions of simultaneous equations obtained by discretization of an integral equation of the second kind derived from Tikhonov regularization method with a weighted square integrable space used as an observation space, and forming a table describing information including numerical solution of the integral equation of the second kind based on the solutions of the simultaneous equations; saving the formed table in a storage; obtaining, by numerical calculation, an inner product, in the weighted square integrable space, of the numerical solution of the integral equation of the second kind and a Laplace transform image multiplied by a mollifier function with reference to the table in the storage, and thereby calculating the numerical solution of the original function; and outputting the numerical solution of the original function.

Preferably, by representing a regularization parameter as a, a mollifier parameter as s, Laplace transform image of an arbitrary function g as Lg, Laplace transform image of the original function of which numerical solution is to be calculated as $F(p)$, and mollifier function as $R_s(p)$, norm of weighted reproducing kernel Hilbert space $H_k$ formed of an absolutely continuous function f attaining zero at the origin is given by Equation (B1)

[Eq 1]

$$\|f\|_{H_k} = \left\{ \int_0^\infty |f'(t)|^2 \frac{1}{\rho(t)} dt \right\}^{1/2} \qquad \ldots(B1)$$

reproducing kernel K(t, t') in the weighted reproducing kernel Hilbert space $H_k$ is given by Equation (B2)

[Eq 2]

$$K(t, t') = \int_0^{\min(t,t')} \rho(\xi) \, d\xi \qquad \ldots(B2)$$

the weighted square integrable space is given by $L_2(R^+, u(p)dp)$, p (t) and u(p) satisfy a condition of Formula (B3)

[Eq 3]

$$\int_0^\infty |(Lf)(p)p|^2 u(p)dp \leq \frac{1}{2}\|f\|_{H_K}^2 \qquad \ldots(B3)$$

the integral equation of the second kind is given by Equation (B4)

[EQ 4]

$$aH_a(\xi, t) + \int_0^\infty H_a(p, t)\{p\xi L(LK.)(p)\}u(p)dp = H(\xi, t) \qquad \ldots(B4)$$

and the inner product is given by Formula (B5)
[EQ 5]

$$\int_0^\infty F(\xi) R_s(\xi)\xi H_a(\xi, t)u(\xi)d\xi \qquad \ldots(B5).$$

Preferably, p(t) is given by Equation (B6), u(p) is given by Equation (B7), and $R_s(p)$ is given by Equation (B8):

[Eq 6]

$$\rho(t) = (t+1)^2 \qquad \ldots(B6)$$

$$u(p) = \exp\left(-p - \frac{1}{p}\right) \qquad \dots (B7)$$

$$R_s(p) = \frac{1}{s^2 p^2}\{\exp(-sp) - 1\}^2 \qquad \dots (B8).$$

Preferably, the computer includes a general purpose register of K-bit length (K is a natural number), a flag register storing a flag indicating whether a carry or a borrow occurred by an immediately preceding operation, and an operator performing an operation dependent on whether or not a carry or a borrow occurred by the immediately preceding operation with reference to the flag; and the step of forming the table and the step of calculating the numerical solution of the original function include the step of representing a fraction of a variable as an object of the numerical calculation by multiple precision expression of K × N bits (N is a natural number not smaller than 2), dividing the fraction of the variable K-bits by K-bits, and causing the operator to perform an operation, using the general-purpose register, successively on the divided fraction, starting from lower bit side.

Preferably, the simultaneous equations are represented in the form of Ax = b, where A is a coefficient matrix having each element independent of t, x is a vector having solutions of the simultaneous equations as elements, and b is a vector having each element dependent on t; the step of forming the table includes the steps of calculating an inverse matrix $A^{-1}$ of the matrix A and storing elements of the inverse matrix $A^{-1}$ in the storage, and for every t in a calculation range, calculating solutions of the simultaneous equations, based on values of elements of the inverse matrix $A^{-1}$ stored in the storage.

Preferably, the simultaneous equations are represented in the form of Ax = b, where A is a coefficient matrix having each element independent of t, x is a vector having solutions of the simultaneous equations as elements, and b is a vector having each element dependent on t; the step of forming the table includes the steps of decomposing the matrix A to a product of an upper triangular matrix and a lower triangular matrix and storing elements of the upper triangular matrix and the lower triangular matrix in the storage, and for every t in a calculation range, calculating solutions of the simultaneous equations, based on values of elements of the upper triangular matrix and the lower triangular matrix stored in the storage.

Preferably, the step of forming the table includes the steps of calculating variables h, xj, pj, qj, aij and H(pj, t) in accordance with Equations (B9) to (B14) from the regularization parameter a, the mollifier parameter s and other parameters n, U and L

[Eq 7]

$$h = \frac{U - L}{n} \qquad \dots (B9)$$

$$x_j = L + jh \qquad (j = 0, 1, 2, \cdots, n) \qquad \dots (B10)$$

$$p_j = \exp\left(\frac{\pi}{2}\sinh x_j\right) \qquad (j = 0, 1, 2, \cdots, n) \qquad \dots (B11)$$

$$q_j = p_j \cosh x_j \qquad (j = 0, 1, 2, \cdots, n) \qquad \dots (B12)$$

$$a_{ij} = \frac{\pi}{2}h\frac{1}{(p_i+p_j)^3}\left\{1+(p_i+p_j)+\frac{(p_i+p_j)^2}{2}\right\}\exp\left(-p_j-\frac{1}{p_j}\right) \quad ...(B13)$$

$$\begin{pmatrix} i = 0, 1, 2, \cdots, n \\ j = 0, 1, 2, \cdots, n \end{pmatrix}$$

$$H(p_j,t) = \frac{2}{p_j^3}\left[1+p_j+\frac{p_j^2}{2}-\exp(-tp_j)\left\{1+p_j(t+1)+\frac{p_j^2(t+1)^2}{2}\right\}\right] \quad ...(B14)$$

$$(j = 0, 1, 2, \cdots, n, \quad t = t_0, t_1, \cdots, t_m),$$

with the simultaneous equations being represented by Equation (B15),
performing Cholesky decomposition of a matrix A represented by Equation (B16) and calculating solutions of Equation (B15)

[Eq 8]

$$\begin{pmatrix} a/q_0+a_{00} & a_{01} & a_{02} & \cdots & a_{0n} \\ a_{10} & a/q_1+a_{11} & a_{12} & \cdots & a_{1n} \\ a_{20} & a_{21} & a/q_2+a_{22} & \cdots & a_{2n} \\ \vdots & \vdots & & \ddots & \vdots \\ a_{n0} & a_{n1} & a_{n2} & \cdots & a/q_n+a_{nn} \end{pmatrix}\begin{pmatrix} H_0'^{n,a,t} \\ H_1'^{n,a,t} \\ H_2'^{n,a,t} \\ \vdots \\ H_n'^{n,a,t} \end{pmatrix} = \begin{pmatrix} H(p_0,t) \\ H(p_1,t) \\ H(p_2,t) \\ \vdots \\ H(p_n,t) \end{pmatrix}$$

$$...(B15)$$

$$A = \begin{pmatrix} a/q_0+a_{00} & a_{01} & a_{02} & \cdots & a_{0n} \\ a_{10} & a/q_1+a_{11} & a_{12} & \cdots & a_{1n} \\ a_{20} & a_{21} & a/q_2+a_{22} & \cdots & a_{2n} \\ \vdots & \vdots & & \ddots & \vdots \\ a_{n0} & a_{n1} & a_{n2} & \cdots & a/q_n+a_{nn} \end{pmatrix} \quad ...(B16),$$

and
in accordance with Equation (B17), calculating a numerical solution $\{H_i^{n,a,t}:i = 0,1, 2,...,n\}$ of the integral equation of the second kind from the solutions of Equation (B 15), and forming a table describing information including the numerical solution of the integral equation of the second kind

[Eq 9]

$$H_i^{n,a,t} = \frac{H_i'^{n,a,t}}{q_i} \quad (i = 0, 1, 2, \cdots, n) \quad ...(B17);$$

and
the step of calculating the numerical solution of the original function includes the step of calculating the numerical solution $f_{a,s}^{(n)}(t)$ of the original function from Laplace transform image F(pj), in accordance with Equation (B 18), with reference to the table

[Eq 10]

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{n,a,t} p_j \cosh x_j \exp\left( - p_j - \frac{1}{p_j} \right)$$

...(B18).

According to an aspect, the present invention provides a program for forming a table, for calculating a numerical solution of an original function of a Laplace transform image under a given regularization parameter and mollifier parameter, causing a computer to execute the steps of: in a weighted reproducing kernel Hilbert space formed of an absolutely continuous function that is zero at an origin, calculating solutions of simultaneous equations obtained by discretization of an integral equation of the second kind derived from Tikhonov regularization method with a weighted square integrable space used as an observation space, and forming a table describing information including numerical solution of the integral equation of the second kind based on the solutions of the simultaneous equations; and saving the formed table in a storage.

Preferably, by representing a regularization parameter as a, a mollifier parameter as s, and Laplace transform image of an arbitrary function g as Lg, norm of weighted reproducing kernel Hilbert space $H_k$ formed of an absolutely continuous function f attaining zero at the origin is given by Equation (B 19)

[Eq 11]

$$\|f\|_{H_k} = \left\{ \int_0^\infty \left| f'(t) \right|^2 \frac{1}{\rho(t)} dt \right\}^{1/2}$$

...(B19)

reproducing kernel K(t, t') in the weighted reproducing kernel Hilbert space $H_k$ is given by Equation (B20)

[Eq 12]

$$K(t, t') = \int_0^{\min(t,t')} \rho(\xi) \, d\xi$$

...(B20)

the weighted square integrable space is given by $L_2(R^+, u(p)dp)$,
p (t) and u(p) satisfy a condition of Formula (B21)

[Eq 13]

$$\int_0^\infty \left| (Lf)(p)p \right|^2 u(p)dp \leq \frac{1}{2} \|f\|_{H_K}^2$$

...(B21);

and
the integral equation of the second kind is given by Equation (B22)

[Eq 14]

$$aH_a(\xi, t) + \int_0^\infty H_a(p, t)\{p\xi L(LK.)(p)\}u(p)dp = H(\xi, t) \qquad \ldots(B22).$$

Preferably, p(t) is given by Equation (B23) and u(p) is given by Equation (B24)

[Eq 15]

$$\rho(t) = (t+1)^2 \qquad \ldots(B23)$$

$$u(p) = \exp\left(-p - \frac{1}{p}\right) \qquad \ldots(B24).$$

Preferably, the computer includes a general purpose register of K-bit length (K is a natural number), a flag register storing a flag indicating whether a carry or a borrow occurred by an immediately preceding operation, and an operator performing an operation dependent on whether or not a carry or a borrow occurred by the immediately preceding operation with reference to the flag; and the step of forming the table includes the step of representing a fraction of a variable as an object of the numerical calculation by multiple precision expression of K × N bits (N is a natural number not smaller than 2), dividing the fraction of the variable K-bits by K-bits, and causing the operator to perform an operation, using the general-purpose register, successively on the divided fraction, starting from lower bit side.

Preferably, the simultaneous equations are represented in the form of Ax = b, where A is a coefficient matrix having each element independent of t, x is a vector having solutions of the simultaneous equations as elements, and b is a vector having each element dependent on t; the step of forming the table includes the steps of calculating an inverse matrix A⁻¹ of the matrix A and storing elements of the inverse matrix A⁻¹ in the storage, and for every t in a calculation range, calculating solutions of the simultaneous equations, based on values of elements of the inverse matrix A⁻¹ stored in the storage.

Preferably, the simultaneous equations are represented in the form of Ax = b, where A is a coefficient matrix having each element independent of t, x is a vector having solutions of the simultaneous equations as elements, and b is a vector having each element dependent on t; the step of forming the table includes the steps of decomposing the matrix A to a product of an upper triangular matrix and a lower triangular matrix and storing elements of the upper triangular matrix and the lower triangular matrix in the storage, and for every t in a calculation range, calculating solutions of the simultaneous equations, based on values of elements of the upper triangular matrix and the lower triangular matrix stored in the storage.

Preferably, the step of forming the table includes the steps of calculating variables h, xj, pj, qj, aij and H(pj, t) in accordance with Equations (B25) to (B30) from the regularization parameter a, the mollifier parameter s and other parameters n, U and L

[Eq 16]

$$h = \frac{U - L}{n} \qquad \ldots(B25)$$

$$x_j = L + jh \qquad (j = 0, 1, 2, \cdots, n) \qquad \ldots(B26)$$

$$p_j = \exp\left(\frac{\pi}{2}\sinh x_j\right) \qquad (j = 0, 1, 2, \cdots, n) \qquad \ldots(B27)$$

$$q_j = p_j \cosh x_j \qquad (j = 0, 1, 2, \cdots, n) \qquad \ldots(B28)$$

$$a_{ij} = \frac{\pi}{2}h\frac{1}{(p_i+p_j)^3}\left\{1+(p_i+p_j)+\frac{(p_i+p_j)^2}{2}\right\}\exp\left(-p_j-\frac{1}{p_j}\right)\ldots(B29)$$

$$\left(\begin{array}{l} i = 0, 1, 2, \cdots, n \\ j = 0, 1, 2, \cdots, n \end{array}\right)$$

$$H(p_j, t) = \frac{2}{p_j^{\,3}}\left[1+p_j+\frac{p_j^{\,2}}{2}-\exp(-tp_j)\left\{1+p_j(t+1)+\frac{p_j^{\,2}(t+1)^2}{2}\right\}\right]\ldots(B30)$$

$$(j = 0, 1, 2, \cdots, n, \quad t = t_0, t_1, \cdots, t_m),$$

with the simultaneous equations being represented by Equation (B31),
performing Cholesky decomposition of a matrix A represented by Equation (B32) and calculating solutions of Equation (B31)

[Eq 17]

$$\begin{pmatrix} a/q_0+a_{00} & a_{01} & a_{02} & \cdots & a_{0n} \\ a_{10} & a/q_1+a_{11} & a_{12} & \cdots & a_{1n} \\ a_{20} & a_{21} & a/q_2+a_{22} & \cdots & a_{2n} \\ \vdots & \vdots & & \ddots & \vdots \\ a_{n0} & a_{n1} & a_{n2} & \cdots & a/q_n+a_{nn} \end{pmatrix}\begin{pmatrix} H_0^{\prime n,a,t} \\ H_1^{\prime n,a,t} \\ H_2^{\prime n,a,t} \\ \vdots \\ H_n^{\prime n,a,t} \end{pmatrix} = \begin{pmatrix} H(p_0,t) \\ H(p_1,t) \\ H(p_2,t) \\ \vdots \\ H(p_n,t) \end{pmatrix}$$

$$\ldots(B31)$$

$$A = \begin{pmatrix} a/q_0+a_{00} & a_{01} & a_{02} & \cdots & a_{0n} \\ a_{10} & a/q_1+a_{11} & a_{12} & \cdots & a_{1n} \\ a_{20} & a_{21} & a/q_2+a_{22} & \cdots & a_{2n} \\ \vdots & \vdots & & \ddots & \vdots \\ a_{n0} & a_{n1} & a_{n2} & \cdots & a/q_n+a_{nn} \end{pmatrix} \qquad \ldots(B32),$$

and

in accordance with Equation (B33), calculating a numerical solution $\{H_i^{n,a,t}:1= 0,1, 2,...,n\}$ of the integral equation of the second kind from the solutions of Equation (B31), and forming a table describing information including the numerical solution of the integral equation of the second kind

[Eq 18]

$$H_i^{n,a,t} = \frac{H_i'^{m,a,t}}{q_i} \qquad (i = 0, 1, 2, \cdots, n) \qquad \ldots (B33).$$

According to a further aspect, the present invention provides a program for calculating a numerical solution of inverse Laplace transform, for forming a numerical solution of an original function of a Laplace transform image using the table formed by the above-described program for forming a table for inverse Laplace transform, causing a computer to execute the steps of: receiving, as an input, the table formed by the above-described program for forming a table for inverse Laplace transform, and saving the input table in a storage; obtaining, by numerical calculation, an inner product, in the weighted square integrable space, of the numerical solution of the integral equation of the second kind and a Laplace transform image multiplied by a mollifier function with reference to the table in the storage, and thereby calculating the numerical solution of the original function; and outputting the numerical solution of the original function

According to a further aspect, the present invention provides a program for calculating a numerical solution of inverse Laplace transform, for forming a numerical solution of an original function of a Laplace transform image using the table formed by the above-described program for forming a table for inverse Laplace transform, causing a computer to execute the steps of: receiving, as an input, the table formed by the above-described program for forming a table for inverse Laplace transform, and saving the input table in a storage; obtaining, by numerical calculation, an inner product, in the weighted square integrable space, of the numerical solution of the integral equation of the second kind and a Laplace transform image F(p) multiplied by a mollifier function $R_s(p)$, with reference to the table in the storage, and thereby calculating the numerical solution of the original function, the inner product given by Formula (B34)

[Eq 19]

$$\int_0^\infty F(\xi) R_s(\xi) \xi H_a(\xi, t) u(\xi) d\xi \qquad \ldots (B34);$$

and outputting the numerical solution of the original function.

According to a further aspect, the present invention provides a program for calculating a numerical solution of inverse Laplace transform, for forming a numerical solution of an original function of a Laplace transform image using the table formed by the above-described program for forming a table for inverse Laplace transform, causing a computer to execute the steps of: receiving, as an input, the table formed by the above-described program for forming a table for inverse Laplace transform, and saving the input table in a storage; obtaining, by numerical calculation, an inner product, in the weighted square integrable space, of the numerical solution of the integral equation of the second kind and a Laplace transform image F(p) multiplied by a mollifier function $R_s(p)$, with reference to the table in the storage, and thereby calculating the numerical solution of the original function, the mollifier function $R_s(p)$ given by Equation (B35)

[Eq 20]

$$R_s(p) = \frac{1}{s^2 p^2} \{\exp(-sp) - 1\}^2 \qquad \ldots (B35)$$

the inner product given by Formula (B36)

[Eq 21]

$$\int_0^{\infty} F(\xi) R_s(\xi) \xi H_a(\xi, t) u(\xi) d\xi \qquad \ldots (B36);$$

and outputting the numerical solution of the original function.

According to a further aspect, the present invention provides a program for calculating a numerical solution of inverse Laplace transform, for forming a numerical solution of inverse Laplace transform using the table formed by the above-described program for forming a table for inverse Laplace transform, causing a computer, including a general purpose register of K-bit length (K is a natural number), a flag register storing a flag indicating whether a carry or a borrow occurred by an immediately preceding operation, and an operator performing an operation dependent on whether or not a carry or a borrow occurred by the immediately preceding operation with reference to the flag, to execute the steps of: receiving, as an input, the table formed by the above-described program for forming a table for inverse Laplace transform, and saving the input table in a storage; obtaining, by numerical calculation, an inner product, in the weighted square integrable space, of the numerical solution of the integral equation of the second kind and a Laplace transform image F(p) multiplied by a mollifier function $R_s(p)$, with reference to the table in the storage, and thereby calculating the numerical solution of the original function, the mollifier function $R_s(p)$ given by Equation (B3 7)

[Eq 22]

$$R_s(p) = \frac{1}{s^2 p^2} \{ \exp(-sp) - 1 \}^2 \qquad \ldots (B37)$$

the inner product given by Formula (B38)

[Eq 23]

$$\int_0^{\infty} F(\xi) R_s(\xi) \xi H_a(\xi, t) u(\xi) d\xi \qquad \ldots (B38);$$

and

outputting the numerical solution of the original function; the step of calculating the numerical solution of the original function includes the step of representing a fraction of a variable as an object of the numerical calculation by multiple precision expression of K × N bits (N is a natural number not smaller than 2), dividing the fraction of the variable K-bits by K-bits, and causing the operator to perform an operation, using the general-purpose register, successively on the divided fraction, starting from lower bit side.

According to a further aspect, the present invention provides a program for calculating a numerical solution of inverse Laplace transform, using the table formed by the above-described program for forming a table for inverse Laplace transform, causing a computer to execute the steps of: receiving, as an input, the table formed by the above-described program for forming a table for inverse Laplace transform, and saving the input table in a storage; calculating the numerical solution $f_{a,s}^{(n)}(t)$ of the original function from the numerical solution of the integral equation of the second kind and a Laplace transform image F(pj), with reference to the table in the storage unit, in accordance with Equation (B39)

[Eq 24]

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{n,a,t} p_j \cosh x_j \exp\left( -p_j - \frac{1}{p_j} \right)$$

$$\ldots (B39);$$

and outputting the numerical solution of the original function.

According to a further aspect, the present invention provides an inverse Laplace transform device, for calculating a numerical solution of an original function of a Laplace transform image under a given regularization parameter and mollifier parameter, including: a table forming unit calculating, in a weighted reproducing kernel Hilbert space formed of an absolutely continuous function that is zero at an origin, solutions of simultaneous equations obtained by discretization of an integral equation of the second kind derived from Tikhonov regularization method with a weighted square integrable space used as an observation space, and forming a table describing information including numerical solution of the integral equation of the second kind based on the solutions of the simultaneous equations; a storage storing the formed table; an inverse transform unit obtaining, by numerical calculation, an inner product, in the weighted square integrable space, of the numerical solution of the integral equation of the second kind and a Laplace transform image multiplied by a mollifier function with reference to the table in the storage, and thereby calculating the numerical solution of the original function; and an output unit outputting the numerical solution of the original function.

Preferably, by representing a regularization parameter as a, a mollifier parameter as s, Laplace transform image of an arbitrary function g as Lg, Laplace transform image of the original function of which numerical solution is to be calculated as F(p), and mollifier function as $R_s(p)$, norm of weighted reproducing kernel Hilbert space $H_k$ formed of an absolutely continuous function f attaining zero at the origin is given by Equation (B40)

[Eq 25]

$$\|f\|_{H_k} = \left\{ \int_0^{\infty} |f'(t)|^2 \frac{1}{\rho(t)} dt \right\}^{1/2} \qquad \ldots (B40)$$

reproducing kernel K(t, t') in the weighted reproducing kernel Hilbert space $H_k$ is given by Equation (B41)

[Eq 26]

$$K(t, t') = \int_0^{\min(t,t')} \rho(\xi) \, d\xi \qquad \ldots (B41)$$

the weighted square integrable space is given by $L_2(R^+, u(p)dp)$,
p (t) and u(p) satisfy a condition of Formula (B42)

[Eq 27]

$$\int_0^{\infty} |(Lf)(p)p|^2 u(p)dp \le \frac{1}{2} \|f\|_{H_K}^2 \qquad \ldots (B42)$$

the integral equation of the second kind is given by Equation (B43)

[Eq 28]

$$aH_a(\xi, t) + \int_0^\infty H_a(p, t)\{p\xi L(LK.)(p)\}u(p)dp = H(\xi, t) \qquad \ldots(\text{B43})$$

and the inner product is given by Formula (B44)

[Eq 29]

$$\int_0^\infty F(\xi) R_s(\xi)\xi H_a(\xi, t)u(\xi)d\xi \qquad \ldots(\text{B44}).$$

Preferably, p(t) is given by Equation (B45), u(p) is given by Equation (B46), and $R_s$(p) is given by Equation (B47)

[Eq 30]

$$\rho(t) = (t+1)^2 \qquad \ldots(\text{B45})$$

$$u(p) = \exp\left(-p - \frac{1}{p}\right) \qquad \ldots(\text{B46})$$

$$R_s(p) = \frac{1}{s^2 p^2}\{\exp(-sp) - 1\}^2 \qquad \ldots(\text{B47}).$$

The table forming unit and the inverse transform unit commonly include: a general purpose register of K-bit length (K is a natural number), a flag register storing a flag indicating whether a carry or a borrow occurred by an immediately preceding operation, and an operator performing an operation dependent on whether or not a carry or a borrow occurred by the immediately preceding operation with reference to the flag; and, for a variable as an object of the numerical calculation, with a fraction of the variable being represented by multiple precision expression of K × N bits (N is a natural number not smaller than 2), and the fraction of the variable being divided K-bits by K-bits, using the general-purpose register, the operator performs an operation successively on the divided fraction, starting from lower bit side.

Preferably, the simultaneous equations are represented in the form of Ax = b, where A is a coefficient matrix having each element independent of t, x is a vector having solutions of the simultaneous equations as elements, and b is a vector having each element dependent on t; the table forming unit calculates an inverse matrix $A^{-1}$ of the matrix A and stores elements of the inverse matrix $A^{-1}$ in the storage, and for every t in a calculation range, calculates solutions of the simultaneous equations, based on values of elements of the inverse matrix $A^{-1}$ stored in the storage.

Preferably, the simultaneous equations are represented in the form of Ax = b, where A is a coefficient matrix having each element independent of t, x is a vector having solutions of the simultaneous equations as elements, and b is a vector having each element dependent on t; the table forming unit decomposes the matrix A to a product of an upper triangular matrix and a lower triangular matrix and stores elements of the upper triangular matrix and the lower triangular matrix in the storage, and for every t in a calculation range, calculates solutions of the simultaneous equations, based on values of elements of the upper triangular matrix and the lower triangular matrix stored in the storage.

Preferably, the table forming unit calculates variables h, xj, pj, qj, aij and H(pj, t) in accordance with Equations (B48) to (B53) from the regularization parameter a, the mollifier parameter s and other parameters n, U and L

[Eq 31]

$$h = \frac{U - L}{n} \qquad \qquad \ldots(B48)$$

$$x_j = L + jh \qquad (j = 0, 1, 2, \cdots, n) \qquad \ldots(B49)$$

$$p_j = \exp\left(\frac{\pi}{2}\sinh x_j\right) \qquad (j = 0, 1, 2, \cdots, n) \qquad \ldots(B50)$$

$$q_j = p_j \cosh x_j \qquad (j = 0, 1, 2, \cdots, n) \qquad \ldots(B51)$$

$$a_{ij} = \frac{\pi}{2} h \frac{1}{(p_i + p_j)^3}\left\{1 + (p_i + p_j) + \frac{(p_i + p_j)^2}{2}\right\}\exp\left(-p_j - \frac{1}{p_j}\right) \ldots(B52)$$

$$\begin{pmatrix} i = 0, 1, 2, \cdots, n \\ j = 0, 1, 2, \cdots, n \end{pmatrix}$$

$$H(p_j, t) = \frac{2}{p_j^{\,3}}\left[1 + p_j + \frac{p_j^{\,2}}{2} - \exp(-tp_j)\left\{1 + p_j(t+1) + \frac{p_j^{\,2}(t+1)^2}{2}\right\}\right] \ldots(B53)$$

$$(j = 0, 1, 2, \cdots, n, \quad t = t_0, t_1, \cdots, t_m)$$

the simultaneous equations are represented by Equation (B54),
the table forming unit performs Cholesky decomposition of a matrix A represented by Equation (B55) and calculates solutions of Equation (B54)

[Eq 32]

$$\begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix}\begin{pmatrix} H_0'^{n,a,t} \\ H_1'^{n,a,t} \\ H_2'^{n,a,t} \\ \vdots \\ H_n'^{n,a,t} \end{pmatrix} = \begin{pmatrix} H(p_0, t) \\ H(p_1, t) \\ H(p_2, t) \\ \vdots \\ H(p_n, t) \end{pmatrix}$$

$$\ldots(B54)$$

$$A = \begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \qquad \ldots (B55)$$

the table forming unit further calculates, in accordance with Equation (B56), a numerical solution $\{H_i^{n,a,t}: i = 0,1, 2,...,n\}$ of the integral equation of the second kind from the solutions of Equation (B54), and forms a table describing information including the numerical solution of the integral equation of the second kind

[Eq 33]

$$H_i^{n,a,t} = \frac{H_i'^{n,a,t}}{q_i} \qquad (i = 0, 1, 2, \cdots, n) \qquad \ldots (B56);$$

and
the inverse transform unit calculates the numerical solution $f_{a,s}^{(n)}(t)$ of the original function from Laplace transform image $F(pj)$, in accordance with Equation (B57), with reference to the table

[Eq 34]

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{n,a,t} p_j \cosh x_j \exp\left( -p_j - \frac{1}{p_j} \right)$$
$$\ldots (B57).$$

EFFECTS OF THE INVENTION

According to the present invention, it is possible to calculate numerical solution of inverse Laplace transform using the reproducing kernel and the regularization method, even when the derivative of original function increases or if the original function is not zero at the origin.

BRIEF DESCRIPTION OF THE DRAWINGS

Fig. 1 show a configuration of an inverse Laplace transform device in accordance with a first embodiment.
Fig. 2 shows an H table.
Fig. 3 is a flowchart representing process steps of forming the H table in accordance with the first embodiment.
Fig. 4 is a flowchart representing process steps of calculating numerical solution of inverse Laplace transform using the H table in accordance with the first embodiment.
Fig. 5 shows a configuration of an inverse Laplace transform device in accordance with a modification of the first embodiment.
Fig. 6 is a flowchart representing process steps of forming the H table in accordance with the modification of the first embodiment.
Fig. 7 is a flowchart representing process steps of forming the H table in accordance with a second embodiment.
Fig. 8 shows a specific configuration of a CPU in accordance with a third embodiment.
Fig. 9 shows a specific configuration of a flag register.
Figs. 10(a), (b) and (c) illustrate expressions of numerical values as the object of operation in the inverse Laplace transform device shown in Fig. 8.

Fig. 11 shows contents of adding process of AMD 64 as an example of the CPU provided with a flag register.

Fig. 12 shows contents of adding process of Alpha.

Fig. 13 shows contents of subtracting process of AMD 64 as an example of the CPU provided with a flag register.

Fig. 14 shows contents of subtracting process of Alpha.

Fig. 15 illustrates contents of multiplication process used in an embodiment of the present invention.

Fig. 16 shows contents of multiplication process in accordance with an embodiment of the present invention.

Fig. 17 illustrates contents of multiplication process used in an embodiment of the present invention.

Fig. 18 shows contents of mul_add of AMD 64 as an example of the CPU provided with a flag register.

Fig. 19 shows contents of mul_add of Alpha.

Fig. 20 illustrates contents of division process using Newton's method.

Fig. 21 shows contents of a subroutine cmp in Fig. 20.

Fig. 22(a) shows calculation result $f_{a,s}^{(n)}(t)$ when the regularization parameter a is a = $10^{-1}$, $10^{-4}$, $10^{-8}$ and $10^{-12}$, and (b) shows calculation result $f_{a,s}^{(n)}(t)$ when the regularization parameter a is a = $10^{-100}$, $10^{-400}$.

Fig. 23(a) shows calculation result $f_{a,s}^{(n)}(t)$ when s = 0.1 and (b) shows calculation result $f_{a,s}^{(n)}(t)$ when s = 0.01.

Fig. 24 shows a configuration of a device for forming a table for inverse Laplace transform, forming the H table.

Fig. 25 shows a configuration of a device for calculating numerical solution of inverse Laplace transform, calculating a numerical solution of inverse Laplace transform.

## DESCRIPTION OF THE REFERENCE SIGNS

1, 81 inverse Laplace transform device, 61 device for forming table for inverse Laplace transform, 71 device for calculating numerical solution of inverse Laplace transform, 2, 62, 72 input unit, 3, 63 CPU, 4, 84 table forming unit, 5 inverse transform unit, 6, 64, 74 main memory, 7, 65, 75 program storage, 8, 66, 76 variable storage, 9 triangular matrix storage, 12 H table storage, 13 output unit, 14 display unit, 67, 77, 99 removable media, 53 control unit, 54 operator, 56 general purpose register group, 57 flag register, 89 inverse matrix storage.

## BEST MODES FOR CARRYING OUT THE INVENTION

In the following, embodiments of the present invention will be described with reference to the figures.

[First Embodiment]

First, a basic algorithm of inverse Laplace transform in accordance with the first embodiment will be described.

(Inverse Laplace Transform using the Reproducing Kernel Space Theory)

Laplace transform of a function f(t) for a natural function space is given by Equation (1). The inversion of Equation (1) is, in general, given by an inverse transform formula based on complex analysis ofBromwich integration. It is sometimes desirable to attain inverse transform using only the values on a positive real axis. The inverse transform using only the values on the positive real axis is referred to as real inverse Laplace transform. Further, f(t) is referred to as an original function, and F(P) is referred to as Laplace transform image.

[Eq. 35]

$$(Lf)(p) = F(p) = \int_0^{\infty} e^{-pt} f(t)\,dt, \qquad p > 0 \qquad\qquad \ldots (1)$$

Let us introduce a weighted reproducing kernel Hilbert space $H_k$ on the positive real axis $R^+$ with finite norms, comprised of absolutely continuous function f satisfying f(0) = 0, given by Equation (2). The weighted reproducing kernel Hilbert space $H_k$ includes a function of which derivative f(t)' of the original function increases.

[Eq. 36]

$$\|f\|_{H_k} = \left\{ \int_0^\infty |f'(t)|^2 \frac{1}{\rho(t)} dt \right\}^{1/2} \qquad \ldots(2)$$

The weighted reproducing kernel Hilbert space $H_k$ admits the reproducing kernel K(t, t') given by Equation (3).

[Eq. 37]

$$K(t, t') = \int_0^{\min(t, t')} \rho(\xi) d\xi \qquad \ldots(3)$$

Here, a linear operator (Lf)(p)p on the weighted square integrable space $L_2(R^+, u(p)dp)$ on weighted reproducing kernel Hilbert space $H_k$ is bounded, so that Formula (4) holds.

[Eq. 38]

$$\int_0^\infty |(Lf)(p)p|^2 u(p)dp \leq \frac{1}{2} \|f\|_{H_K}^2 \qquad \ldots(4)$$

From the general theory, Formula (4) leads to the following.

Tikhonov regularization is to minimize the right side of Equation (5) for any $g \in L_2(R^+, u(p)dp)$ and for any regularization parameter a > 0. By Tikhonov regularization using the weighted square integrable space $L_2(R^+, u(p)dp)$ as an observation space on weighted reproducing kernel Hilbert space $H_k$, the best approximation function $f_a(t)$ given by Equation (6) is derived.

[Eq 39]

$$\inf_{f \in H_K} \left\{ a \int_0^\infty |f'(t)|^2 \frac{1}{\rho(t)} dt + \|(Lf)(p)p - g\|_{L_2(R^+, u(p)dp)}^2 \right\}$$

$$= a \int_0^\infty |f_a'(t)|^2 \frac{1}{\rho(t)} dt + \|(Lf_a)(p)p - g\|_{L_2(R^+, u(p)dp)}^2 \qquad \ldots(5)$$

$$f_a(t) = \int_0^\infty F(\xi) \xi (LK_a(\cdot, t))(\xi) \xi u(\xi) d\xi \qquad \ldots(6)$$

Here, $K_a(,t)$ is represented by Equations (7) to (9).

[Eq 40]

$$K_t = K(\cdot, t) \qquad \ldots(7)$$

$$K_{a,t'} = K_a\left(\cdot, t'\right) \qquad\qquad \ldots(8)$$

$$K_a(t, t') = \frac{1}{a} K(t, t') - \frac{1}{a}\left(\left(LK_{a,t'}\right)(p)\, p, (LK_t)(p)\, p\right)_{L_2\left(R^+,\, u(\xi)dp\right)} \ldots(9)$$

The weighted reproducing kernel Hilbert space $H_k$ described above is on condition that f(0) = 0. In order that the characteristic of weighted reproducing kernel Hilbert space $H_k$ described above be utilized for functions f(t) where f (0) ≠ 0, the best approximation function $f_a(t)$ of Equation (6) is corrected, using a mollifier function $R_s(p)$. The corrected best approximation function $f_{a,s}(t)$ is given by Equation (10), where s represents a mollifier parameter.

[Eq 41]

$$f_{a,s}(t) = \int_0^\infty F(\xi) R_s(\xi)\, \xi\left(LK_a(\cdot, t)\right)(\xi)\, \xi u(\xi)\, d\xi \qquad\qquad \ldots(10)$$

By Laplace transform of t in Equation (9) and newly representing t' as t, we obtain Equation (11).

[Eq 42]

$$\left(LK_a(\cdot, t)\right)(\xi)$$
$$= \frac{1}{a}\left(LK(\cdot, t)\right)(\xi) - \frac{1}{a}\left(\left(LK_{a,t}\right)(p)\, p, \left(L\left((LK.)(p)\, p\right)\right)(\xi)\right)_{L_2\left(R^+,\, u(p)dp\right)} \qquad \ldots(11)$$

From Equations (12) and (13), we obtain Equations (11) to (14). Equation (14) can be represented as Equation (15). Further, from Equation (10), we obtain Equation (16).

[Eq 43]

$$H_a(\xi, t) := \left(LK_a(\cdot, t)\right)(\xi)\, \xi \qquad\qquad \ldots(12)$$

$$H(\xi, t) := \left(LK(\cdot, t)\right)(\xi)\, \xi \qquad\qquad \ldots(13)$$

$$aH_a(\xi, t) + \int_0^\infty H_a(p, t)\left[p\, \xi L(LK.)(p)\right] u(p)\, dp = H(\xi, t) \qquad \ldots(14)$$

$$\alpha H_\alpha(\xi, t) + \int_0^\infty H_\alpha(p, t) \left[ \int_0^\infty e^{-\xi t'} \left\{ \int_0^\infty e^{-pq} K(q, t')\, dq \right\} p\xi\, dt' \right] u(p)\, dp$$

$$= \xi \int_0^\infty e^{-q\xi} K(q, t)\, dq \qquad \qquad \ldots(15)$$

$$f_{a,s}(t) = \int_0^\infty F(\xi) R_s(\xi) \xi H_\alpha(\xi, t) u(\xi)\, d\xi \qquad \qquad \ldots(16)$$

In Equation (14), unknown function appears in the integration, and it is referred to as an integral equation of the second kind. The corrected best approximation function $f_{a,\varepsilon}$ (t) is represented by Equation (16), which is an inner product in the weighted square integrable space between the solution of integral equation of the second kind and the Laplace transform image multiplied by the mollifier function. In the inverse Laplace transform in accordance with the present embodiment, the corrected best approximation function $f_{a,\varepsilon}$ (t) is obtained as an approximate solution of image f(t).

(Specific Forms of Functions)

As specific examples of functions p(t), u(p) and $R_s$(p), forms represented by Equations (17) to (19) may be used.

[Eq 44]

$$\rho(t) = (t + 1)^2 \qquad \qquad \ldots(17)$$

$$u(p) = \exp\left( -p - \frac{1}{p} \right) \qquad \qquad \ldots(18)$$

$$R_s(p) = \frac{1}{s^2 p^2} \left\{ \exp(-sp) - 1 \right\}^2 \qquad \qquad \ldots(19)$$

If function ρ(t) is represented by Equation (17), Equation (3) can be represented by Equation (20) below.

[Eq 45]

$$K(t, t') = \int_0^{\min(t, t')} (\xi + 1)^2\, d\xi \; = \begin{cases} \dfrac{1}{3}\left\{ (t+1)^3 - 1 \right\}, & for\ t \leq t' \\[2mm] \dfrac{1}{3}\left\{ (t'+1)^3 - 1 \right\}, & for\ t \geq t' \end{cases} \qquad \ldots(20)$$

Further, from Equation (20), we obtain Equation (21).

[Eq 46]

$$\left(LK(\cdot,t)\right)(\xi) = \frac{2}{\xi^4}\left[1+\xi+\frac{\xi^2}{2}-\exp(-t\xi)\left\{1+\xi(t+1)+\frac{\xi^2(t+1)^2}{2}\right\}\right] \quad \ldots(21)$$

Further, Equation (14) can be represented as Equations(22) and (23), and Equation (16) can be represented by Equation (24).

[Eq 47]

$$aH_a(\xi,t)+\int_0^\infty H_a(p,t)\frac{2}{(p+\xi)^3}\left\{1+(p+\xi)+\frac{(p+\xi)^2}{2}\right\}\exp\left(-p-\frac{1}{p}\right)dp = H(\xi,t)$$
$$\ldots(22)$$

$$H(\xi,t) = \frac{2}{\xi^3}\left[1+\xi+\frac{\xi^2}{2}-\exp(-t\xi)\left\{1+\xi(t+1)+\frac{\xi^2(t+1)^2}{2}\right\}\right] \quad \ldots(23)$$

$$f_{a,s}(t) = \int_0^\infty F(\xi)\frac{1}{s^2\xi^2}\left\{\exp(-s\xi)-1\right\}^2\xi H_a(\xi,t)\exp\left(-\xi-\frac{1}{\xi}\right)d\xi \quad \ldots(24)$$

(Discretization)

We conduct discretization to enable calculation of Equations (22) to (24) by a computer. For simplicity of computation, Nistrom method is used for discretization.
Using upper limit U and lower limit L of integral interval, number of samples n for integration and the regularization parameter a, the following variables h, xj, pj and wj below are defined in accordance with Equations (25) to (28).

[Eq 48]

$$h = \frac{U-L}{n} \quad \ldots(25)$$

$$x_j = L+jh \qquad (j=0,1,2,\cdots,n) \quad \ldots(26)$$

$$p_j = \exp\left(\frac{\pi}{2}\sinh x_j\right) \qquad (j=0,1,2,\cdots,n) \quad \ldots(27)$$

$$w_j(\xi) = \frac{\pi}{2} p_j \cosh x_j \frac{2}{(p_j + \xi)^3} \left\{ 1 + (p_j + \xi) + \frac{(p_j + \xi)^2}{2} \right\} \exp\left( -p_j - \frac{1}{p_j} \right)$$

$$(i = 0, 1, 2, \cdots, n) \qquad \qquad \ldots(28)$$

Discretization of Equation (22) leads to Equation (29) and discretization of Equation (24) leads to Equation (30), when Equations (25) to (28) are used.

[Eq 49]

$$aH_i^{n,a,t} + h \sum_{j=0}^{n} w_j(p_i) H_j^{n,a,t} = H(p_i, t), \qquad i = 0, 1, 2, \cdots, n \quad \ldots(29)$$

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{n,a,t} p_j \cosh x_j \exp\left( -p_j - \frac{1}{p_j} \right)$$

$$\ldots(30)$$

Therefore, by finding solutions $\{H_j^{n,a,t}: i = 0,1, 2,...,n\}$ of simultaneous equations of (29) and inputting these to Equation (30), numerical solution $f_{a,s}^{(n)}(t)$ of the original function of inverse Laplace transform can be obtained.

(Method of Solving Simultaneous equations (29))

As a method of solving the simultaneous equations of (29), we take the following approach.

First, the following variables qj and aij represented by Equations (31) and (32) below are used. Here, Equations (33) and (34) hold.

[Eq 50]

$$q_j = p_j \cosh x_j \qquad \qquad \ldots(31)$$

$$a_{ij} = \frac{\pi}{2} h \frac{2}{(p_i + p_j)^3} \left\{ 1 + (p_i + p_j) + \frac{(p_i + p_j)^2}{2} \right\} \exp\left( -p_j - \frac{1}{p_j} \right)$$

$$\ldots(32)$$

$$h\, w_j(p_i) = q_j a_{ij} \qquad \qquad \ldots(33)$$

$$a_{ij} = a_{ji} \qquad \qquad \ldots(34)$$

By using these variables, Equation (29) can be transformed to Equation (35). Matrix form of Equation (35) is (36), and coefficient matrix A can be defined as (37).

[Eq 51]

$$aH_i^{\,n,a,t} + \sum_{j=0}^{n} q_j a_{ij} H_j^{\,n,a,t} = H(p_i, t), \qquad i = 0, 1, 2, \cdots, n \qquad \ldots(35)$$

$$\begin{pmatrix} a + q_0 a_{00} & q_1 a_{01} & q_2 a_{02} & \cdots & q_n a_{0n} \\ q_0 a_{10} & a + q_1 a_{11} & q_2 a_{12} & \cdots & q_n a_{1n} \\ q_0 a_{20} & q_1 a_{21} & a + q_2 a_{22} & \cdots & q_n a_{2n} \\ \vdots & \vdots & & \ddots & \vdots \\ q_0 a_{n0} & q_1 a_{n1} & q_2 a_{n2} & \cdots & a + q_n a_{nn} \end{pmatrix} \begin{pmatrix} H_0^{\,n,a,t} \\ H_1^{\,n,a,t} \\ H_2^{\,n,a,t} \\ \vdots \\ H_n^{\,n,a,t} \end{pmatrix} = \begin{pmatrix} H(p_0, t) \\ H(p_1, t) \\ H(p_2, t) \\ \vdots \\ H(p_n, t) \end{pmatrix}$$

$$\ldots(36)$$

$$A = \begin{pmatrix} a + q_0 a_{00} & q_1 a_{01} & q_2 a_{02} & \cdots & q_n a_{0n} \\ q_0 a_{10} & a + q_1 a_{11} & q_2 a_{12} & \cdots & q_n a_{1n} \\ q_0 a_{20} & q_1 a_{21} & a + q_2 a_{22} & \cdots & q_n a_{2n} \\ \vdots & \vdots & & \ddots & \vdots \\ q_0 a_{n0} & q_1 a_{n1} & q_2 a_{n2} & \cdots & a + q_n a_{nn} \end{pmatrix} \qquad \ldots(37)$$

By LU decomposition of coefficient matrix A and by forward and backward substitutions, we obtain the solution of matrix (36), that is, the solution $\{H_j^{n,a,t} : i = 0, 1, 2, ..., n\}$ of Equation (29). Using variable qj, Equation (30) can be transformed to Equation (38).

[Eq 52]

$$f_{a,s}^{(n)}(t) = \frac{\pi}{2} h \sum_{j=0}^{n} F(p_j) \frac{1}{s^2 p_j^{\,2}} \left\{ \exp(-s p_j) - 1 \right\}^2 p_j H_j^{\,n,a,t} q_j \exp\left( -p_j - \frac{1}{p_j} \right)$$

$$\ldots(38)$$

(Configuration)

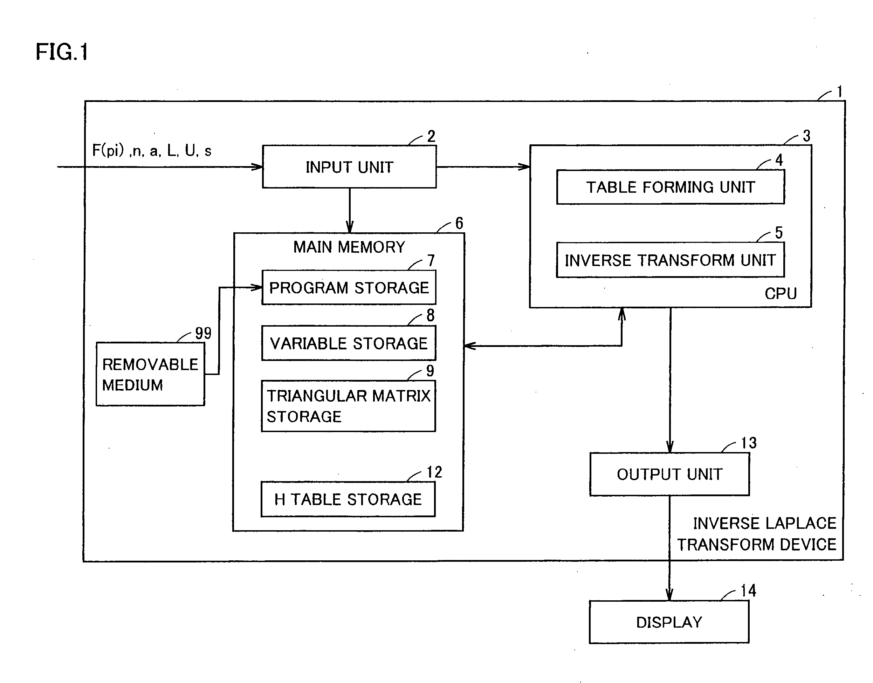

Fig. 1 shows a configuration of the inverse Laplace transform device in accordance with an embodiment of the present invention.

Referring to Fig. 1, inverse Laplace transform device 1 is implemented by a computer and it includes an input unit 2, a main memory 6, a CPU (Central Processing Unit) 3, and an output unit 13. Main memory 6 includes a program storage 7, a variable storage 8, an H table storage 12, and a triangular matrix storage 9. CPU 3 functions as a table forming unit 4 and an inverse transform unit 5.

Input unit 2 is for inputting the number n of samples, upper limit value U, lower limit value L, the regularization parameter a, the mollifier parameter s and Laplace transform image F(pi) and the like, implemented, for example, by a keyboard.

Output unit 13 outputs the numerical solution $f_{a,s}^{(n)}(t)$ of the original function of inverse Laplace transform to the outside, for example, to a display device 14. On display device 14, the numerical solution $f_{a,s}^{(n)}(t)$ of the original function of inverse Laplace transform is displayed in the form of characters or a graph.

Program storage 7 stores an inverse Laplace transform program causing the computer to function as inverse Laplace transform device 1. The inverse Laplace transform program may be installed from the outside through a removable medium 99, which is a computer readable recording medium such as a USB (Universal Serial Bus) memory or a CD-ROM (Compact Disk-Read Only Memory).

In accordance with the inverse Laplace transform program stored in program storage 7, table forming unit 4 obtains through numerical calculation the solutions of simultaneous equations of (35) resulting from discretization of integral equations of the second kind given by Equations (22) and (23), and describes numerical solution $\{H_i^{n,a,t}:i = 0,1, 2,...,n\}$ of the integral equations of the second kind based on the numerical calculation in the H table. In accordance with the inverse Laplace transform program stored in program storage 7, table forming unit 4 decomposes the coefficient matrix A given by Equation (37) to a product of upper triangular matrix U and lower triangular matrix L, stores elements of the upper triangular matrix U and lower triangular matrix L in triangular matrix storage 9, and for every t in the calculation range, calculates solutions of Equation (3 5) based on the element values of upper triangular matrix U and lower triangular matrix L stored in triangular matrix storage 9.

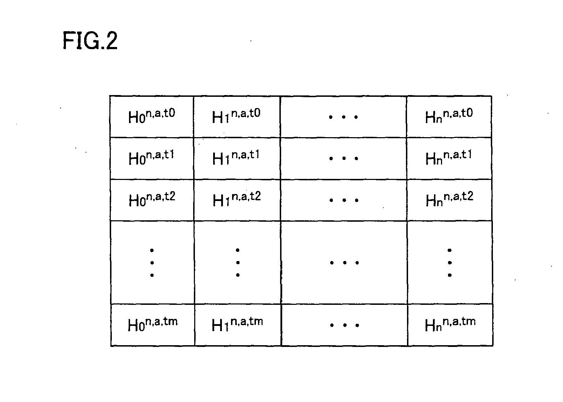

H table storage 12 stores the H table such as shown in Fig. 2, formed by table forming unit 4.

Inverse transform unit 5 calculates, by numerical calculation of Equation (38) resulting from discretization of Equation (24) with reference to the H table, the numerical solution $f_{a,s}^{(n)}(t)$ of the original function of inverse Laplace transform.

Variable storage 8 stores values of variables for numerical calculations required for the table forming process by table forming unit 4, and for calculating the numerical solution of original function of inverse Laplace transform by inverse transform unit 5.

Triangular matrix storage 9 stores the upper triangular matrix U and the lower triangular matrix L formed by table forming unit 4 when the solutions of simultaneous equations of Equation (35) are calculated.

(Steps of Forming H Table)

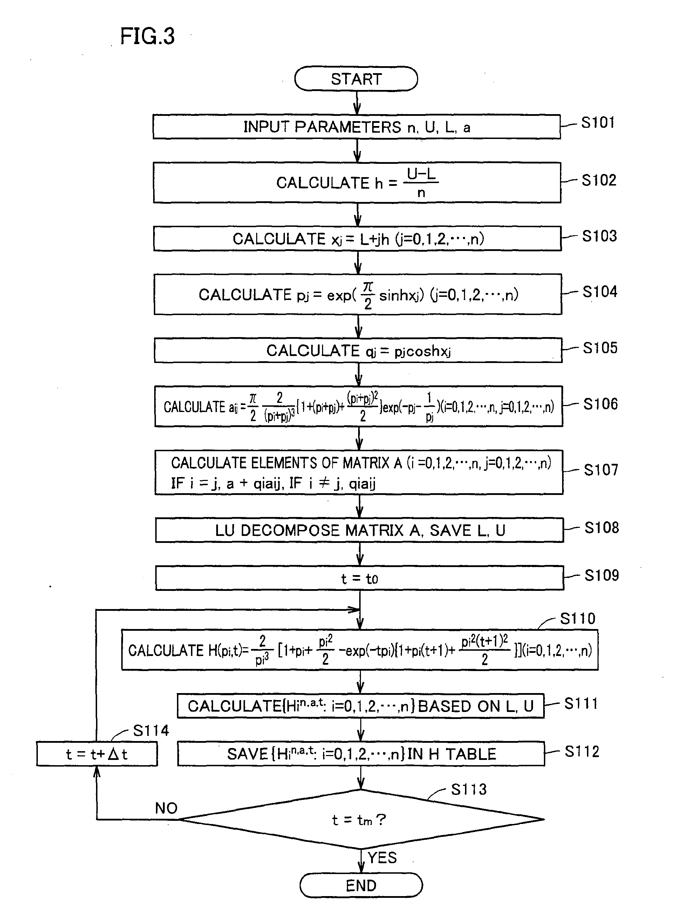

Fig. 3 is a flowchart representing process steps of forming the H table in accordance with a first embodiment.

First, the sample number n, upper limit value U, lower limit value L and the regularization parameter a are input to input unit 2 from the outside (step S101).

Next, table forming unit 4 calculates h = (U - L)/n, and stores the value h in variable storage 8 (step S 102).

Next, table forming unit 4 calculates xj = L + j $\times$ h for j = 0, 1, 2, ... n, and stores the value xj in variable storage 8 (step S103).

Next, table forming unit 4 calculates pj = exp $\{(\pi/2) \times \sin h(xj)\}$ for j = 0, 1, 2, ... n, and stores the value pj in variable storage 8 (step S104).

Next, table forming unit 4 calculates qj = pj $\times$ cos h(xj) for j = 0, 1, 2, ... n, and stores the value qj in variable storage 8 (step S105).

Next, table forming unit 4 calculates aij = $(\pi/2) \times (2/(pi + pj)^3) \times \{1+(pi + pj) + (pi + pj)^2/2\} \times$ exp(-pj -1/pj) for i = 0, 1, 2, ... n and j = 0, 1, 2, ... n, and stores the value aij in variable storage 8 (step S106).

Next, table forming unit 4 calculates elements of coefficient matrix A for i = 0, 1, 2, ... n and j = 0, 1, 2, ... n. If i = j, table forming unit 4 calculates a + qi $\times$ aii as the ij element of coefficient matrix A, and if i $\neq$ j, it calculates qj $\times$ aij as the ij element of coefficient matrix A (step S107).

Next, table forming unit 4 performs LU decomposition of coefficient matrix A, and stores values of elements of upper triangular matrix U and lower triangular matrix L in triangular matrix storage 9 (step S108).

Next, table forming unit 4 sets t = t(0) (initial value) (step S109).

Next, table forming unit 4 calculates H(pi, t) = $(2/pi^3) \times [1 + pi + pi^2/2 - $ exp $(-tpi) \times \{1 + pi(t + 1) + pi^2 (t + 1)^2/2\}]$, and stores H(pi, t) in variable storage 8 (step S110).

Next, table forming unit 4 calculates the solution $\{H_i^{n,a,t}:i = 0,1, 2,...,n\}$ of Equation (29) by forward and backward substitutions, based on the values of elements of upper triangular matrix U and lower triangular matrix L stored in triangular matrix storage 9, and stores the solution in variable storage 8 (step S111).

Next, table forming unit 4 stores the solution $\{H_i^{n,a,t}:i = 0,1, 2,...,n\}$ of Equation (29) in variable storage 8 in the H table (step S112).

Next, if t is equal to tm (end value) (YES at step S 113), table forming unit 4 ends the process, and if t is not equal to tm (end value) (NO at step S 113), it increases the value t by $\Delta t$ (step S114) and repeats the process from step S110.

(Steps of Calculating Numerical Solution of Inverse Laplace Transform Using H Table)

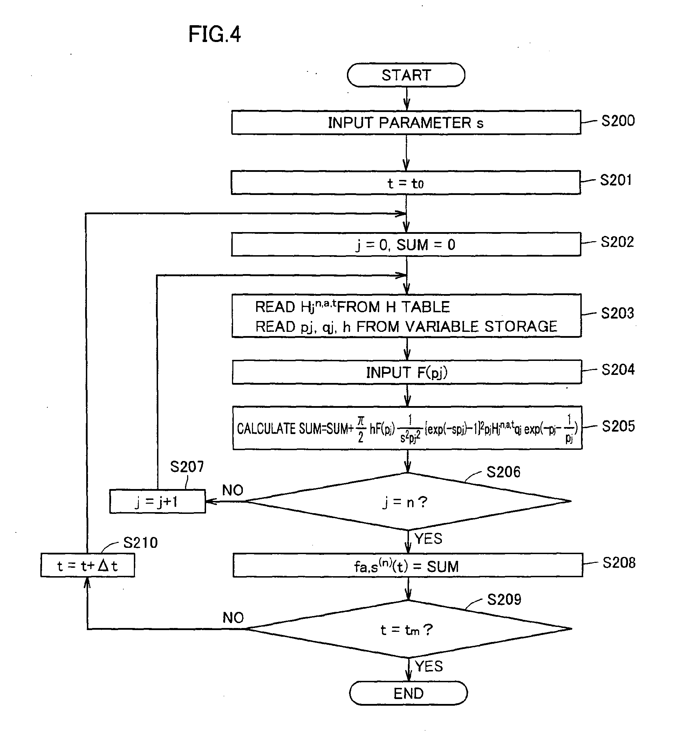

Fig. 4 is a flowchart representing process steps of calculating the numerical solution of inverse Laplace transform using the H table in accordance with the first embodiment.

First, a mollifier parameter s is input to input unit 2 from the outside (step S200).

Next, inverse transform unit 5 sets t = t(0) (step S201).

Next, inverse transform unit 5 sets j = 0 and SUM = 0 (step S202).

Next, inverse transform unit 5 reads $H_j^{n,a,t}$ from the H table, and reads pj, qj and h from variable storage 8 (step S203).

Next, a Laplace transform image F(pj) is input to input unit 2 from the outside (step S204).

Next, inverse transform unit 5 calculates SUM = SUM + $(\pi/2) \times$ h $\times$ F(pj) $\times (1/s^2pj^2)\{\exp(-spj) - 1\}^2 \times$ pj $\times H_j^{n,a,t} \times$ qj $\times$ exp(-pj -1/pj), and stores the result of calculation in variable storage 8 (step S205).

Next, if j is not equal to n (NO at step S206), inverse transform unit 5 increases j by 1 (step S207), and repeats the process from step S203.

If j is equal to n (YES at step S206), inverse transform unit 5 sets inverse Laplace transform value to $f_{a,s}^{(n)}(t)$ = SUM (step S208).

Next, if t is equal to tm (YES at step S209), inverse transform unit 5 ends the process and, if t is not equal to tm (end value) (NO at step S209), it increases t by $\Delta$t (step S210), and repeats the process from step S202.

As described above, by the inverse Laplace transform device in accordance with the first embodiment, even if the derivative of original function increases or if the original function is not zero at the origin, it is possible to calculate the numerical solution of inverse Laplace transform. Further, utilizing the characteristic that coefficient matrix A of simultaneous equations of Equation (36) is independent from t, coefficient matrix A is LU decomposed only once, values of elements of the lower triangular matrix L and upper triangular matrix U resulting from the decomposition are stored, and using the stored values of elements of the lower triangular matrix L and the upper triangular matrix U for every t, the solutions of simultaneous equations can be calculated. Therefore, computational load can be reduced than when coefficient matrix A is subjected to LU decomposition every time the value t changes.

Further, referring to Equation (29), solutions $\{H_i^{n,a,t}:i = 0, 1, 2,...,n\}$ of the simultaneous equations are independent of Laplace transform image F(pi). Therefore, when the solution of Equation (36) is calculated and stored, it can be used for Laplace transform of any F(pi).

[Modification of First Embodiment]

In the embodiment of the present invention, the simultaneous equations are solved by LU decomposition of coefficient matrix A forming the simultaneous equations resulting from discretization of an integral equation of the second kind. The method is not limited to the above, and the simultaneous equations may be solved by calculating an inverse matrix $A^{-1}$ of coefficient matrix A.

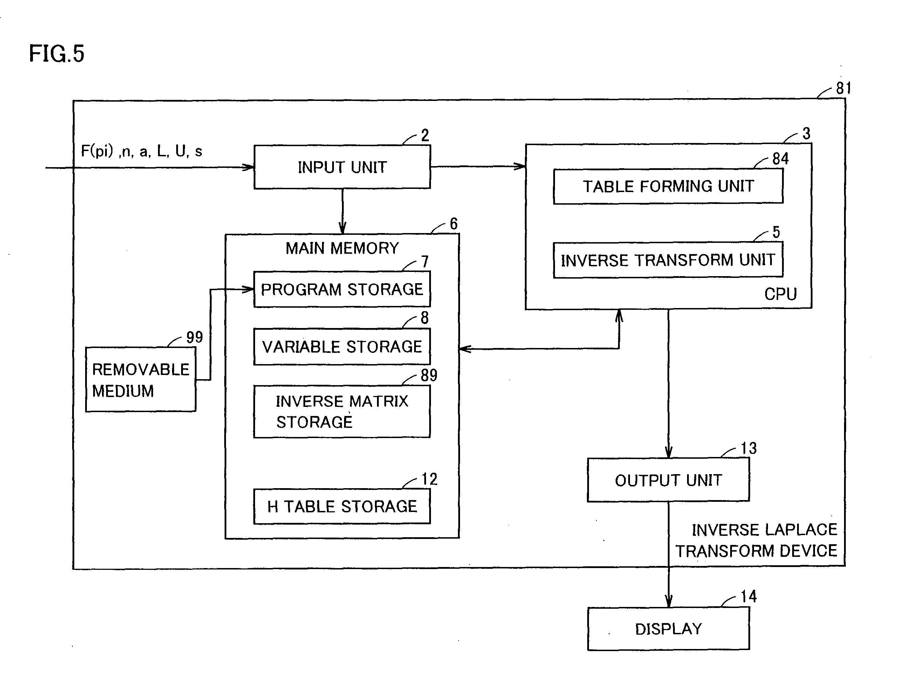

Fig. 5 shows a configuration of an inverse Laplace transform device in accordance with a modification of the first embodiment of the present invention. Referring to Fig. 5, inverse Laplace transform device 81 differs from inverse Laplace transform device 1 in accordance with the first embodiment in a table forming unit 84 and an inverse matrix storage 89.

In accordance with an inverse Laplace transform program stored in program storage 7, table forming unit 84 obtains, by numerical calculation, the solutions of simultaneous equations of Equation (3 5) resulting from discretization of integral equations of the second kind represented by Equations (22) and (23), and writes the numerical solution $\{H_i^{n,a,t}: i = 0, 1, 2,...,n\}$ of integral equations of the second kind obtained based on the numerical calculation in the H table. In accordance with an inverse Laplace transform program stored in program storage 7, table forming unit 84 calculates the inverse matrix $A^{-1}$ of coefficient matrix A represented by Equation (37), stores values of elements of inverse matrix $A^{-1}$ in inverse matrix storage 89, and based on the values of elements of inverse matrix $A^{-1}$ stored in inverse matrix storage 89, calculates the solution of Equation (35) for every t in the calculation range.

Inverse matrix storage 89 stores the value of each element of inverse matrix $A^{-1}$ formed when the solutions of simultaneous equations of Equation (35) are calculated by table forming unit 4.

(Steps of Forming H Table)

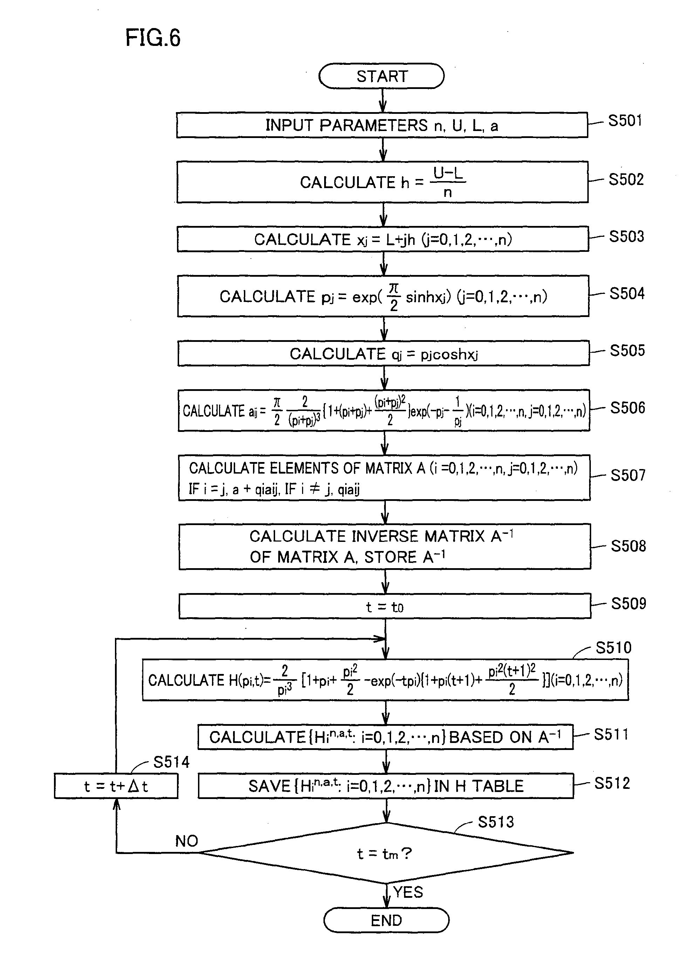

Fig. 6 is a flowchart representing process steps of forming the H table in accordance with the modification of the first embodiment.

First, the sample number n, upper limit value U, lower limit value L and the regularization parameter a are input to input unit 2 from the outside (step S501).

Next, table forming unit 4 calculates h = (U - L)/n, and stores the value h in variable storage 8 (step S502).

Next, table forming unit 4 calculates xj = L + j $\times$ h for j = 0, 1, 2, ... n, and stores the value xj in variable storage 8 (step S503).

Next, table forming unit 4 calculates pj = exp {(π/2) $\times$ sin h(xj)} for j = 0, 1, 2, ... n, and stores the value pj in variable storage 8 (step S504).

Next, table forming unit 4 calculates qj = pj $\times$ cos h(xj) for j = 0, 1, 2, ... n, and stores the value qj in variable storage 8 (step S505).

Next, table forming unit 4 calculates aij = (π/2) $\times$ (2/(pi + pj)$^3$) $\times$ {1+(pi + pj) + (pi + pj)$^2$/2} $\times$ exp(-pj -1/pj) for i = 0, 1, 2, ... n and j = 0, 1, 2, ... n, and stores the value aij in variable storage 8 (step S506).

Next, table forming unit 4 calculates elements of coefficient matrix A for i = 0, 1, 2, ... n and j = 0, 1, 2, ... n. If i = j, table forming unit 4 calculates a + qi $\times$ aii as the ij element of coefficient matrix A, and if i ≠ j, it calculates qj $\times$ aij as the ij element of coefficient matrix A (step S507).

Next, table forming unit 4 calculates inverse matrix A$^{-1}$ of coefficient matrix A, and stores the value of each element of inverse matrix A$^{-1}$ in inverse matrix storage 89 (step S508).

Next, table forming unit 4 sets t = t(0) (initial value) (step S509).

Next, table forming unit 4 calculates H(pi, t) = (2/pi$^3$) $\times$ [1 + pi + pi$^2$/2 - exp (-tpi) $\times$ {1 + pi(t + 1) + pi$^2$ (t + 1)$^2$/2}], and stores H(pi, t) in variable storage 8 (step S510).

Next, table forming unit 4 calculates the solution {H$_i^{n,a,t}$:i = 0,1, 2,...,n} of Equation (29) based on the values of elements of inverse matrix A$^{-1}$ stored in in inverse matrix storage 89, and stores the solution in variable storage 8 (step S511).

Next, table forming unit 4 stores the solution {H$_i^{n,a,t}$:i = 0,1, 2,...,n} of Equation (29) in variable storage 8 in the H table (step S512).

Next, if t is equal to tm (end value) (YES at step S513), table forming unit 4 ends the process, and if t is not equal to tm (end value) (NO at step S513), it increases the value t by Δt (step S514) and repeats the process from step S510.

As described above, by the inverse Laplace transform device in accordance with the modification of the first embodiment, utilizing the characteristic that coefficient matrix A of simultaneous equations of Equation (36) is independent from t, inverse matrix A$^{-1}$ of coefficient matrix A is calculated only once, values of elements of the inverse matrix A$^{-1}$ are stored, and using the stored values of elements of the inverse matrix A$^{-1}$ for every t, the solutions of simultaneous equations can be calculated. Therefore, computational load can be reduced than when the inverse matrix A$^{-1}$ of coefficient of matrix A is calculated every time the value t changes.

[Second Embodiment]

The second embodiment relates to an inverse Laplace transform device for calculating solutions of simultaneous equations by discretization of integral equations of the second kind, using a symmetrical matrix A' in place of coefficient matrix A, by transforming Equation (29).

(Solution of Simultaneous Equation (23))

As in the first embodiment, variables qj and aij represented by Equations (31) to (34) are used.

In the second embodiment, Equation (29) is transformed to Equation (39).

[Eq 53]

$$\frac{a}{q_i} q_i H_i^{\,n,a,t} + \sum_{j=0}^{n} a_{ij} q_j H_j^{\,n,a,t} = H(p_i, t), \qquad i = 0, 1, 2, \cdots, n \qquad \ldots (39)$$

If we define H$_i^{'n,a,t}$ as Equation (40), Equation (39) can be transformed to Equation (41). By writing Equation (41) in the form of a matrix, we obtain Equation (42), from which matrix A' can be defined as Equation (43).

[Eq 54]

$$H_i^{\prime n,a,t} = q_i H_i^{\,n,a,t} \qquad \ldots (40)$$

$$\frac{a}{q_i}H_i'^{n,a,t} + \sum_{j=0}^{n} a_{ij}H_j'^{n,a,t} = H(p_i, t), \qquad i = 0, 1, 2, \cdots, n \quad \ldots(41)$$

$$\begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \begin{pmatrix} H_0'^{n,a,t} \\ H_1'^{n,a,t} \\ H_2'^{n,a,t} \\ \vdots \\ H_n'^{n,a,t} \end{pmatrix} = \begin{pmatrix} H(p_0, t) \\ H(p_1, t) \\ H(p_2, t) \\ \vdots \\ H(p_n, t) \end{pmatrix}$$

$$\ldots(42)$$

$$A' = \begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \qquad \ldots(43)$$

Matrix A' is a symmetrical matrix, and by Cholesky decomposition of matrix A', we obtain the solution of Equation (42). From the solution $\{H_i'^{n,a,t}: i = 0, 1, 2, ...,n\}$ of Equation (42), the solution $\{H_i^{n,a,t}: i = 0, 1, 2, ...,n\}$ of Equation (29) can be obtained, using Equation (44).

[Eq 55]

$$H_i'^{n,a,t} = \frac{H_i'^{n,a,t}}{q_i} \qquad \ldots(44)$$

(Steps of Forming H Table)

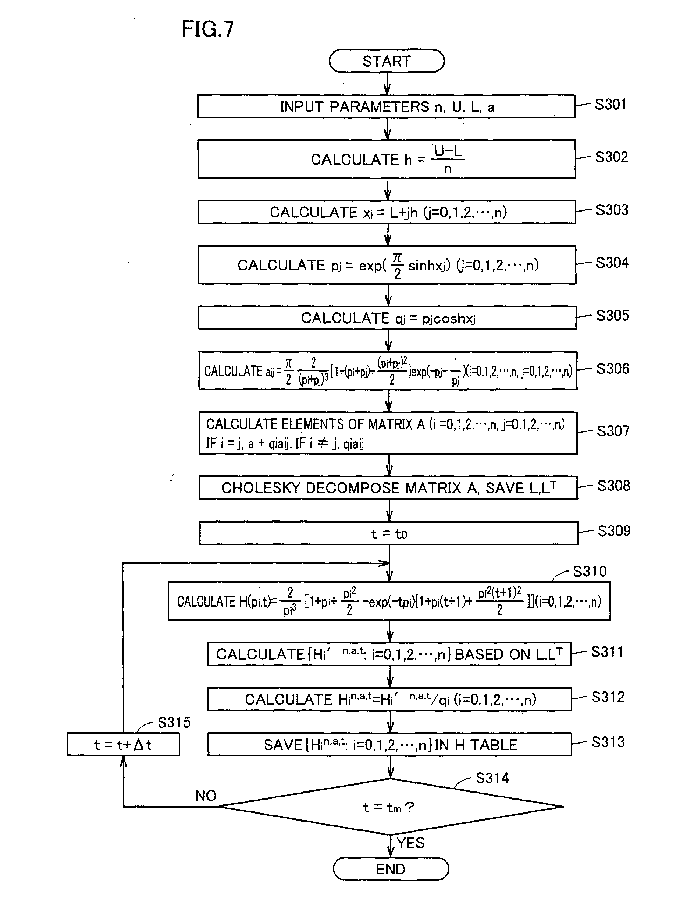

Fig. 7 is a flowchart representing process steps of forming the H table in accordance with the second embodiment.

First, the sample number n, upper limit value U, lower limit value L and the regularization parameter a are input to input unit 2 from the outside (step S301).

Next, table forming unit 4 calculates h = (U - L)/n, and stores the value h in variable storage 8 (step S302).

Next, table forming unit 4 calculates xj = L + j $\times$ h for j = 0, 1, 2, ... n, and stores the value xj in variable storage 8 (step S303).

Next, table forming unit 4 calculates pj = exp $\{(\pi/2) \times$ sin h(xj)$\}$ for j = 0, 1, 2, ... n, and stores the value pj in variable storage 8 (step S304).

Next, table forming unit 4 calculates qj = pj $\times$ cos h(xj) for j = 0, 1, 2, ... n, and stores the value qj in variable storage 8 (step S305).

Next, table forming unit 4 calculates aij = $(\pi/2) \times$ (2/(pi + pj)$^3$) $\times$ {1+(pi + pj) + (pi + pj)$^2$/2} $\times$ exp(-pj -1/pj) for i = 0, 1, 2, ... n and j = 0, 1, 2, ... n, and stores the value aij in variable storage 8 (step S306).

Next, table forming unit 4 calculates elements of coefficient matrix A for i = 0, 1, 2, ... n and j = 0, 1, 2, ... n. If i = j, table forming unit 4 calculates a/qi $\times$ aii as the ij element of coefficient matrix A, and if i # j, it sets aij as the ij element of coefficient matrix A (step S307).

Next, table forming unit 4 performs Cholesky decomposition of coefficient matrix A, and stores elements of lower triangular matrix L and upper triangular matrix $L^T$ (T for "transverse") in triangular matrix storage 9 (step S308).

Next, table forming unit 4 sets t = t(0) (initial value) (step S309).

Next, table forming unit 4 calculates H(pi, t) = $(2/pi^3) \times$ [1 + pi + $pi^2/2$ - exp (-tpi) $\times$ {1 + pi(t + 1) + $pi^2$ $(t + 1)^2/2$}], and stores H(pi, t) in variable storage 8 (step S310).

Next, table forming unit 4 calculates the solution {$H_i^{'n,a,t}$:i = 0,1, 2,...,n} of Equation (41) by forward and backward substitutions, based on the lower triangular matrix L and upper triangular matrix $L^T$ stored in triangular matrix storage 9, and stores the solution in variable storage 8 (step S311).

Next, table forming unit 4 calculates $H_i^{n,a,t} = H_i^{'n,a,t}/qi$ for i = 0, 1, 2 ... n, and stores it in variable storage 8 (step S312).

Next, table forming unit 4 stores the solution {$H_i^{n,a,t}$:i = 0,1, 2,...,n} of Equation (29) in variable storage 8 in the H table (step S313).

Next, if t is equal to tm (end value) (YES at step S314), table forming unit 4 ends the process, and if t is not equal to tm (end value) (NO at step S314), it increases the value t by $\Delta t$ (step S315) and repeats the process from step S310.

As described above, the inverse Laplace transform device in accordance with the second embodiment attains effects similar to those of the first embodiment. In addition, since the coefficient matrix A constituting the simultaneous equations resulting from discretization of an integral equation of the second kind is transformed to a symmetrical matrix A' and the solutions of simultaneous equations can be calculated utilizing Cholesky decomposition, computational load can further be reduced than in the first embodiment.

[Third Embodiment]

The third embodiment relates to a device capable of multiple-precision arithmetic, for calculating the solutions {$H_i^{n,a,t}$:i = 0,1, 2,...,n} of simultaneous equations and the numerical solution $f_{a,s}^{(n)}(t)$ of inverse Laplace transform of the first or second embodiment. Though an example of multiple-precision arithmetic corresponding to the second embodiment will be described in the following, the operation is similar for the first embodiment.

(Configuration)

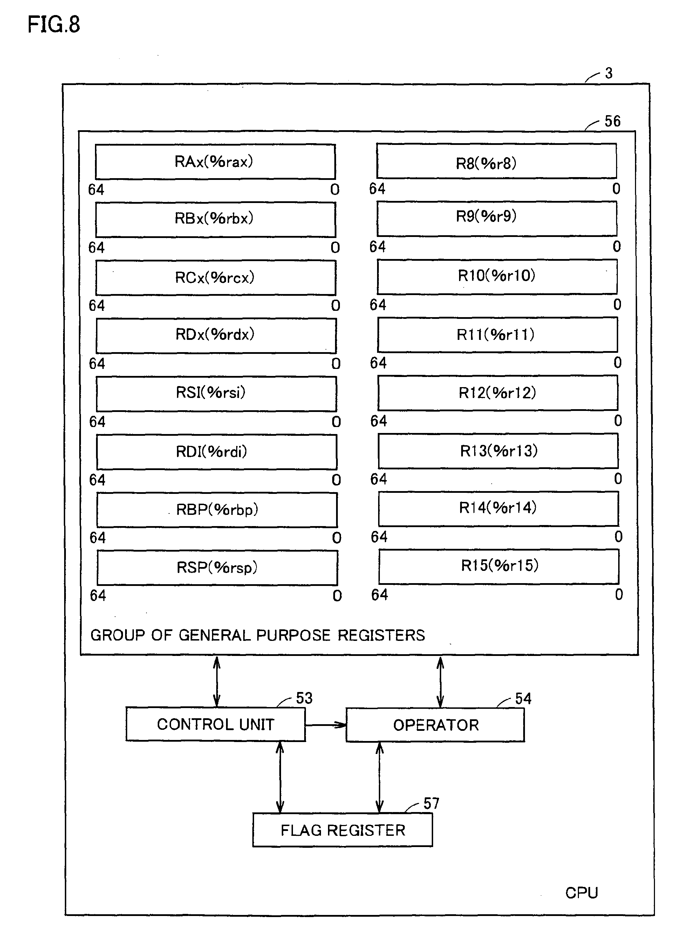

Fig. 8 shows a specific configuration of a CPU 3 in accordance with the third embodiment.

Referring to Fig. 8, CPU 3 includes a control unit 53, an operator 54, a group of general purpose registers 56 and a flag register 57. It has been described with reference to Fig. 1 that CPU functions as table forming unit 4 and inverse transform unit 5. The relation between Fig. 1 and Fig. 8 is as follows. Control unit 53, operator 54, the group of general purpose registers 56 and flag register 57 specifically realize the functions of table forming unit 4 and inverse transform unit 5. Specifically, table forming unit 4 and inverse transform unit 5 commonly include control unit 53, operator 54, the group of general purpose registers 56 and flag register 57. In other words, control unit 53, operator 54, the group of general purpose registers 56 and flag register 57 perform formation of the H table and calculation of the numerical value of inverse Laplace transform described with reference to the first or second embodiment, in accordance with the inverse Laplace transform program stored in program storage 7.

Operator 54 performs addition, subtraction, multiplication, division, logic operation on bits, and bit shift operation.

The group of general purpose registers 56 include 16 general purpose registers RAX, RBX, RCX, RDX, RSI, RDI, RBP, RSP, R8, R9, R10, R12, R13, R14 and R15. In Fig. 8, characters in parentheses represent register names designated by assembler language. Each register is of 64 bit length.

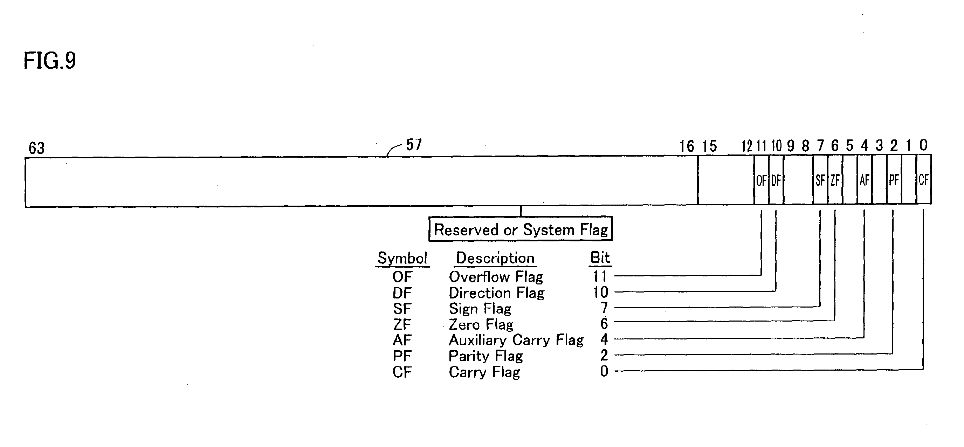

Fig. 9 shows a specific configuration of flag register 57.

Referring to Fig. 9, at the least significant bit of flag register 57, a value of a carry flag CF is stored, indicating whether or not a carry to or borrow from the second least significant bit occurred in the immediately preceding operation at the most significant bit (64th bit) of each of the group of general purpose registers 56. If the value of carry flag CF is "1", it means that there has been a carry or borrow, and if the value of carry flag CF is "0", it means that there has not been a carry or borrow.

Addition by operator 54 includes addition with carry and addition without carry. When addition of X + Y with carry is to be performed, operator 54 adds the values of X, Y and carry flag CF, and if a carry occurs in the result of addition, sets the value of carry flag CF to "1" and if a carry does not occur in the result of addition, sets the value of carry flag CF to "0". When addition of X + Y without carry is to be performed, operator 54 adds the values of X and Y, and if a carry occurs in the result of addition, sets the value of carry flag CF to "1" and if a carry does not occur in the result of addition, sets the value of carry flag CF to "0".

Subtraction by operator 54 also includes subtraction with borrow and subtraction without borrow. When subtraction of X - Y with borrow is to be performed, operator 54 subtracts values of Y and carry flag CF from X, and if a borrow occurs in the result of subtraction, sets the value of carry flag CF to "1" and if a borrow does not occur in the result of subtraction, sets the value of carry flag CF to "0".

When subtraction of X - Y without borrow is to be performed, operator 54 subtracts the value Y from X, and if a borrow occurs in the result of subtraction, sets the value of carry flag CF to "1" and if a borrow does not occur in the result of subtraction, sets the value of carry flag CF to "0".

Numerical values as the object of operations in the inverse Laplace transform device shown in Fig. 8, including, for example, numerical values n, U, L, a, h, s, xj, pj, qj, aij, elements of coefficient matrix A, L and $L^T$ obtained by Cholesky decomposition of coefficient matrix A, H(pi, t), $H_i'^{n,a,t}$, $H_i^{n,a,t}$, F(pj), S and $f_{a,s}^{(n)}(t)$ are given in the floating point format.

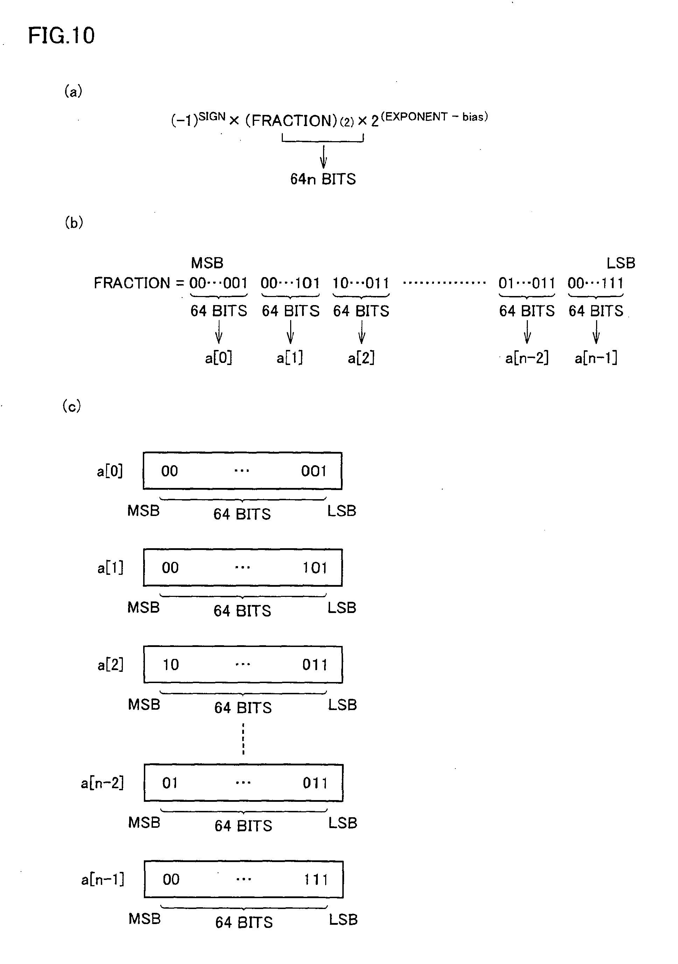

In Fig. 10, (a), (b) and (c) illustrate expressions of numerical values as the objects of operation in the inverse Laplace transform device shown in Fig. 8.

As shown in Fig. 10 (a), the numerical value is represented in the floating point format. If the sign is "0", it represents a positive number, and if the sign is "1", it represents a negative number. Only the fraction is represented by multiple precision 64n bits (n is a natural number not smaller than 2). The exponent and the sign are represented by 64 bits.

As shown in (b) and (c) of Fig. 10, the integer part of fraction is typically "1". At the time of addition and subtraction, however, bit-shift occurs for alignment of decimal point position. If the decimal point position of the fraction shifts to the left by K bits, the value of exponent decreases by K. If the decimal point position of the fraction shifts to the right by K bits, the value of exponent increases by K.

As shown in (b) and (c) of Fig. 10, in order to perform operations using general purpose registers each of 64 bits in the group of general purpose registers 56, an array a having the number of elements n is secured in a main memory 6. The fraction is divided 64-bits by 64-bits, and each set of 64 bits resulting from the division is stored in each element of the array a. By way of example, 64 bits from the most significant bit are stored in element a[0] of the array, and the following 64 bits are stored in element a[1] of the array. Operation proceeds successively, starting from the array storing lower side bits.

(Process of Addition in the Present Embodiment)

The process of addition of the fraction in accordance with the present embodiment will be described.

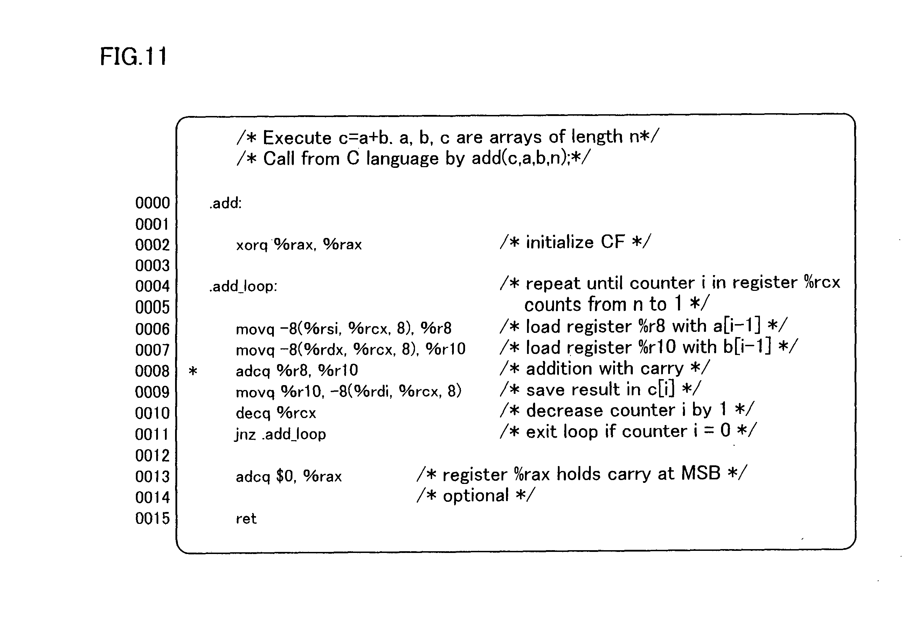

Fig. 11 represents contents of the addition process by an AMD 64 as an example of CPU 3 including flag register 57. This figure represents an assembler routine called by add(c, a, b, n) from C language.

Here, add(c, a, b, n) represents a routine of adding the array a having the number of elements n in main memory 6 and an array b having the number of elements n in main memory 6, and storing the result of addition in an array c having the number of elements n in main memory 6.

When add(c, a, b, n) is called, control unit 53 sets the value n in register %rcx for holding the value of a counter i, sets a pointer to the array a in register %rsi, sets a pointer to the array b in register %rdx, and sets a pointer to the array c in register %rdi.

On the second line, control unit 53 sets the value of register %rax for holding the information indicating presence/absence of a carry at the most significant bit to "0" (that is, no carry), and initializes the value of carry flag CF in flag register 57 to "0" (that is, no carry).

On the sixth line, control unit 53 loads register %r8 with the value a[i-1] in main memory 6.

On the seventh line, control unit 53 loads register %r10 with the value b[i-1] in main memory 6.

On the eighth line, operator 54 executes addition with carry. Specifically, operator 54 adds the data in register %r8, the data in register %r10 and the value of carry flag CF in flag register 57, and saves the result of addition in register %r10. If carry occurs in the addition, the operator sets the value of carry flag CF in flag register 57 to "1", and if no carry occurs, it sets the value of carry flag CF in flag register 57 to "0".

On the ninth line, control unit 53 saves the result of addition in register %r10 in the area c[i-1] in main memory 6.

On the tenth line, operator 54 decreases the counter i by "1".

On the eleventh line, control unit 53 causes control flow to exit a loop if the value of counter i is "0" and to return to the beginning of the loop if counter i is not "0".

On the thirteenth line, operator 54 adds an immediate value "0", data (= "0") in register %rax and the value of carry flag CF in flag register 57, and saves the result of addition in register %rax. Therefore, in register %rax, information indicating presence/absence of a carry at the most significant bit is held.

(Reference: Process of Addition not Using Carry Flag)

Next, for comparison, the process of adding the fraction in Alpha, as an example of CPU 3 not having flag register 57, will be described.

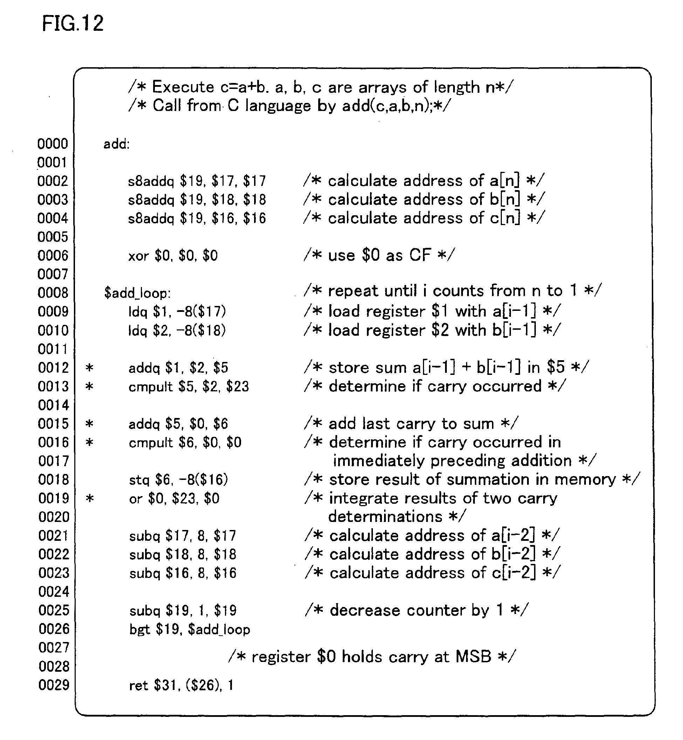

Fig. 12 shows contents of the adding process by Alpha. It shows an assembler routine called by add(c, a, b, n) from C language.

Here, add(c, a, b, n) represents a routine of adding the array a having the number of elements n in main memory 6 and the array b having the number of elements n in main memory 6, and storing the result of addition in the array c having the number of elements n in main memory 6.

When add(c, a, b, n) is called, control unit 53 sets the value n in register $19 for holding the value of a counter i, sets a pointer to the array a in register $17, sets a pointer to the array b in register $18, and sets a pointer to the array c in register $16.

On the second line, control unit 53 calculates an address of array a[n], and stores it in register $17.

On the third line, control unit 53 calculates an address of array b[n], and stores it in register $18.

On the fourth line, control unit 53 calculates an address of array c[n], and stores it in register $16.

On the sixth line, control unit 53 sets the value of register $0 holding the information indicating presence/absence of a carry to "0" (that is, no carry).

On the ninth line, control unit loads register $1 with the value of a[i-1] in main memory 6.

On the tenth line, control unit loads register $2 with the value of b[i-1] in main memory 6.

On the twelfth line, operator 54 executes addition. Specifically, operator 54 adds the data in register $1 and the data in register $2, and saves the result of addition in register $5.

On the thirteenth line, operator 54 determines whether there has been a carry in the addition of the twelfth line. Specifically, if the data (= result of addition c) in register $5 is smaller than the data (= b) in register $2, it is understood that there has been a carry and, therefore, control unit 53 stores "1" in register $23 and otherwise, since it is understood that there has been no carry, stores "0" in register $23.

On the fifteenth line, operator 54 adds the data (= result of addition) in register $5 and the data representing presence/absence of a carry in the last loop stored in register $0, and stores the result of addition in register $6.

On the sixteenth line, operator 54 determines whether there has been a carry in the addition of the fifteenth line. Specifically, if the data in register $6 is smaller than the data in register $0, it is understood that there has been a carry and, therefore, control unit 53 stores "1" in register $0 and otherwise, since it is understood that there has been no carry, stores "0" in register $0.

On the eighteenth line, control unit 53 saves the result of addition in register $6 in the area c[i-1] in main memory 6.

On the nineteenth line, operator 54 stores a logical sum of the data in register $0 and the data in register $23 in $0, whereby the result of carry determination on the thirteenth line is integrated with the result of carry determination on the sixteenth line. The results of determination can be integrated in this manner, since the data in register $0 and the data in register $23 could never be both "1".

On the twenty-first line, control unit 53 calculates an address of array a[i-2], and stores it in register $17.

On the twenty-second line, control unit 53 calculates an address of array b[i-2], and stores it in register $18.

On the twenty-third line, control unit 53 calculates an address of array c[i-2], and stores it in register $16.

On the twenty-fifth line, operator 54 decreases counter i by "1".

On the twenty-sixth line, control unit 53 causes control flow to exit the loop if counter i is "0", and to return to the beginning of the loop if counter i is not equal to "0".

(Comparison of Adding Processes)

When we compare Figs. 11 and 12, in order to realize a function comparable to the instruction of addition with carry adcq on the eighth line of Fig. 11, Fig. 12 requires five instructions, that is, addition instruction addq on the twelfth line, comparison instruction cmplt on the thirteenth line, addition instruction addq on the fifteenth line, comparison instruction complt on the sixteenth line, and a logical sum instruction or on the nineteenth line. From the foregoing, it can be understood that by utilizing a carry flag CF as in the present embodiment, the number of instructions for the adding process of fraction can be made smaller than when it is not utilized.

(Process of Subtraction)

The process of subtraction of the fraction in accordance with the present embodiment will be described.

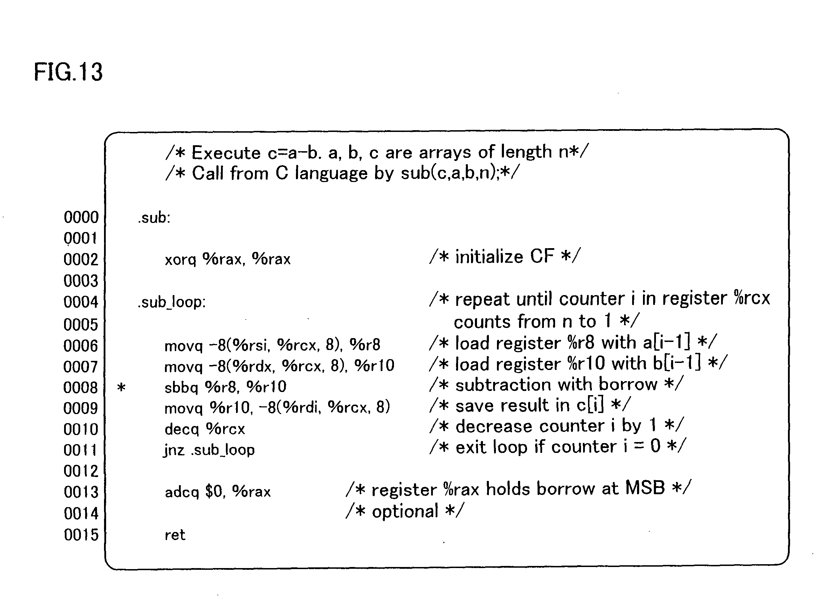

Fig. 13 shows contents of a subtraction process of AMD 64 as an example of CPU 3 including flag register 57. This figure represents an assembler routine called by sub(c, a, b, n) from C language.

Here, sub(c, a, b, n) represents a routine of subtracting an array b having the number of elements n in main memory 6 from an array a having the number of elements n in main memory 6 and storing the result of subtraction in an array c having the number of elements n in main memory 6.

When sub(c, a, b, n) is called, control unit 53 sets the value n in register %rcx for holding the value of a counter i, sets a pointer to the array a in register %rsi, sets a pointer to the array b in register %rdx, and sets a pointer to the array c in register %rdi.

On the second line, control unit 53 sets the value of register %rax for holding the information indicating presence/absence of a borrow at the most significant bit to "0" (that is, no borrow), and initializes the value of carry flag CF in flag register 57 to "0" (that is, no borrow).

On the sixth line, control unit 53 loads register %r8 with the value a[i-1] in main memory 6.

On the seventh line, control unit 53 loads register %r10 with the value b[i-1] in main memory 6.

On the eighth line, operator 54 executes subtraction with borrow. Specifically, operator 54 subtracts the data in register %r10 and the value of carry flag CF in flag register 57 from the data in register %r8, saves the result of subtraction in register %r10, sets the value of carry flag CF in flag register 57 to "1" if there is a borrow in the subtraction and sets the value of carry flag CF in flag register 57 to "0" if there is no borrow.

On the ninth line, control unit 53 saves the result of addition in register %r10 in the area c[i-1] in main memory 6.

On the tenth line, operator 54 decreases the counter by "1".

On the eleventh line, control unit 53 causes control flow to exit the loop if counter i is "0", and to return to the beginning of the loop if counter i is not equal to "0".

On the thirteenth line, operator 54 adds an immediate value "0", data (= "0") in register %rax and the value of carry flag CF in flag register 57, and saves the result of addition in register %rax. Therefore, in register %rax, information indicating presence/absence of a borrow at the most significant bit is held.

(Reference: Process of Subtraction not Using Carry Flag)

Next, for comparison, the process of subtracting the fraction in Alpha, as an example of CPU 3 not having flag register CF, will be described.

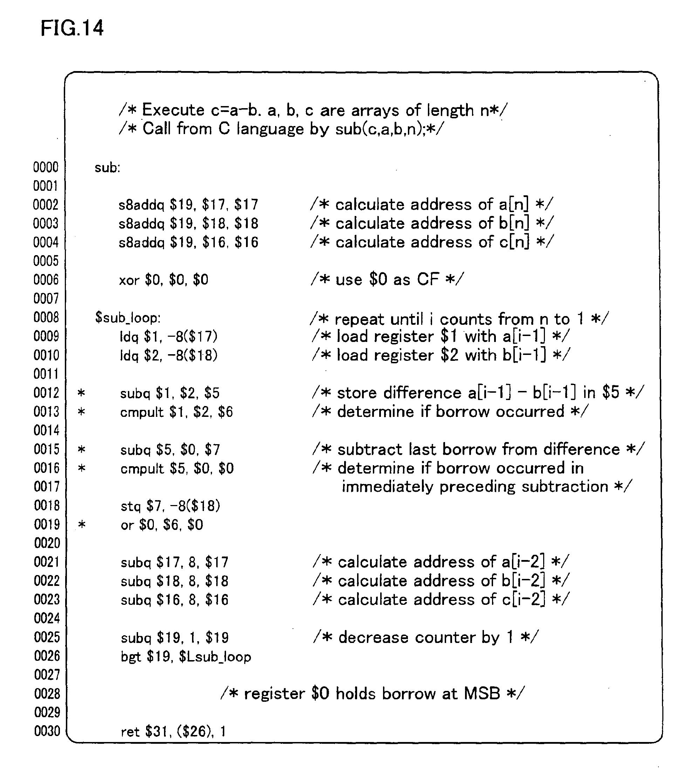

Fig. 14 shows contents of the subtraction process by Alpha. It shows an assembler routine called by sub(c, a, b, n) from C language.

Here, sub(c, a, b, n) represents a routine of subtracting the array b having the number of elements n in main memory 6 from the array a having the number of elements n in main memory 6 and storing the result of subtraction in the array c having the number of elements n in main memory 6.

When sub(c, a, b, n) is called, control unit 53 sets the value n in register $19 for holding the value of a counter i, sets a pointer to the array a in register $17, sets a pointer to the array b in register $18, and sets a pointer to the array c in register $16.

On the second line, control unit 53 calculates an address of array a[n], and stores it in register & 17.

On the third line, control unit 53 calculates an address of array b[n], and stores it in register $18.

On the fourth line, control unit 53 calculates an address of array c[n], and stores it in register $16.

On the sixth line, control unit 53 sets the value of register $0 holding the information indicating presence/absence of a borrow to "0" (that is, no borrow).

On the ninth line, control unit 53 loads register $1 with the value of a[i-1] in main memory 6.

On the tenth line, control unit 53 loads register $2 with the value of b[i-1] in main memory 6.

On the twelfth line, operator 54 executes subtraction. Specifically, operator 54 subtracts the data in register $2 from the data in register $1, and saves the result of subtraction in register $5.

On the thirteenth line, operator 54 determines whether there has been a borrow in the subtraction of the twelfth line. Specifically, if the data (= a) in register $1 is smaller than the data (= b) in register $2, it is understood that there has been a borrow and, therefore, control unit 53 stores "1" in register $6 and otherwise, since it is understood that there has been no borrow, stores "0" in register $6.

On the fifteenth line, operator 54 subtracts the data representing presence/absence of a borrow in the last loop stored in register $0 from the data (= result of subtraction) in register $5, and stores the result of subtraction in register $7.

On the sixteenth line, operator 54 determines whether there has been a borrow in the subtraction of the fifteenth line. Specifically, if the data in register $5 is smaller than the data in register $0, it is understood that there has been a borrow and, therefore, control unit 53 stores "1" in register $0 and otherwise, since it is understood that there has been no borrow, stores "0" in register $0.

On the eighteenth line, control unit 53 saves the result of subtraction in register $7 in the area c[i-1] in main memory 6.

On the nineteenth line, operator 54 stores a logical sum of the data in register $0 and the data in register $6 in $0, whereby the result of borrow determination on the thirteenth line is integrated with the result of borrow determination on the sixteenth line. The results of determination can be integrated in this manner, since the data in register $0 and the data in register $6 could never be both "1".

On the twenty-first line, control unit 53 calculates an address of array a[i-2], and stores it in register $17.

On the twenty-second line, control unit 53 calculates an address of array b[i-2], and stores it in register $18.

On the twenty-third line, control unit 53 calculates an address of array c[i-2], and stores it in register $16.

On the twenty-fifth line, operator 54 decreases counter i by "1".

On the twenty-sixth line, control unit 53 causes control flow to exit the loop if counter i is "0", and to return to the beginning of the loop if counter i is not equal to "0".

(Comparison of Subtraction Process)

When we compare Figs. 13 and 14, in order to realize a function comparable to the instruction of subtraction with borrow sbbq on the eighth line of Fig. 13, Fig. 14 requires five instructions, that is, subtraction instruction subq on the twelfth line, comparison instruction cmplt on the thirteenth line, subtraction instruction subq on the fifteenth line, comparison instruction complt on the sixteenth line, and a logical sum instruction or on the nineteenth line. From the foregoing, it can be understood that by utilizing a carry flag CF as in the present embodiment, the number of instructions for the subtraction process of addition unit can be made smaller than when it is not utilized.

(Process of Multiplication)

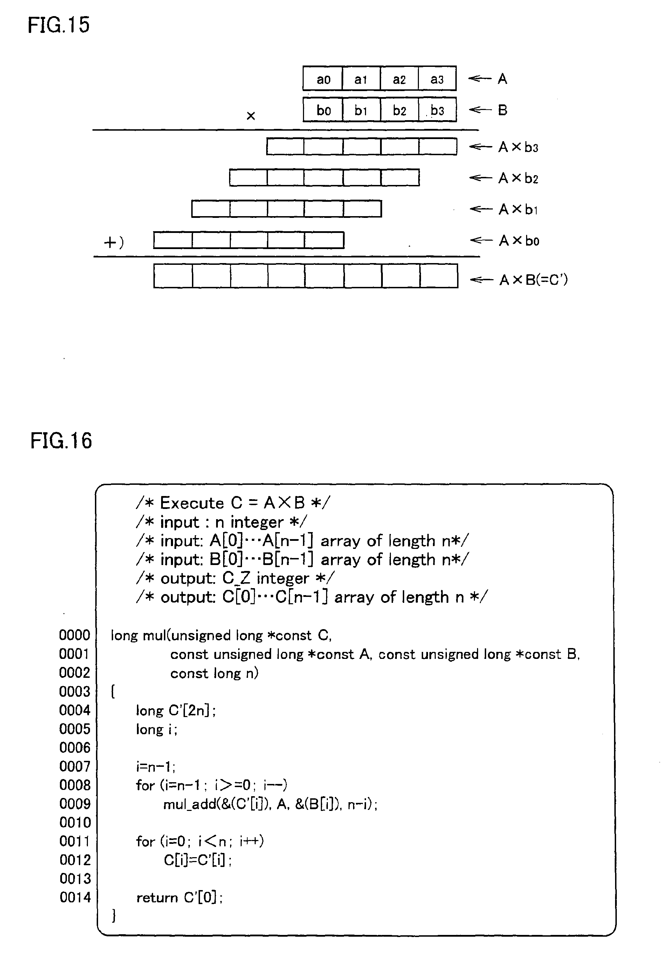

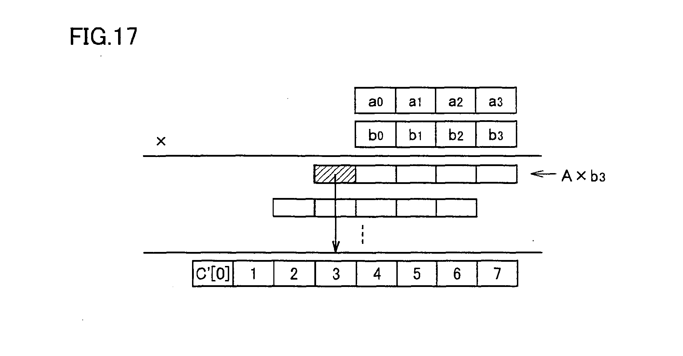

First, contents of basic process for the multiplication used in an embodiment of the present invention will be described. Referring to Fig. 15, let us consider a multiplication of an array A having 4 elements and an array B having 4 elements. Assume that the data of array A[0] is a0, the data of array A[1] is a1, the data of array A[2] is a2, and the data of array A[3] is a3. Assume that the data of array B[0] is b0, the data of array B[1] is b1, the data of array B[2] is b2, and the data of array B[3] is b3. The data length of a0, a1, a2, a3, b0, b1, b2 and b3 is each 64 bits. As shown in Fig. 15, the result of multiplication between array A and each of b0, b1, b2 and b3 will be 64 $\times$ 5 bits. When array A is multiplied by array B, the result of multiplication will be 64 $\times$ 8 bits.
When a product of fractions in floating point format is considered, not all of the 64 $\times$ 8 bits is necessary. Lower bits may not have any significant influence on the calculation accuracy even when virtually ignored.
In the embodiment of the present invention, in the multiplication of an array A having n elements (that is, 64 $\times$ n bits) and an array B having n elements (that is, 64 $\times$ n bits), only the upper half of 64 $\times$ n bits is calculated and stored in an array C having n elements.
In the multiplication of array A and array B shown in Fig. 15, only 64 $\times$ 4 bits are calculated, from the upper bits. Here, for the calculation of A $\times$ b3, a0 $\times$ b3 is necessary, whereas a1 $\times$ b3, a2 $\times$ b3 and a3 $\times$ b3 can be omitted. In contrast, for the calculation of A $\times$ b0, calculations of a0 $\times$ b0, a1 $\times$ b0, a2 $\times$ b0 and a3 $\times$ b0 are all necessary.
Fig. 16 shows contents of the process of multiplication in accordance with an embodiment of the present invention.
Referring to Fig. 16, in this process of multiplication, array A having n elements (each element of 64 bits) is multiplied by array B having n elements (each element of 64 bits), and of the result of multiplication, 64 $\times$ n bits as the upper half are stored in array C having n elements.
Here, mul_add on the eighth line represents a routine of multiplying (n-i) elements from the beginning of array A (A[0], ..., A[n-i-1]) by array B[i] and adding the result of multiplication behind the array C'[i]. By way of example, if n is 4 and i is 3 as shown in Fig. 17, only the multiplication of B[3] (= b3) and A[0] (= a0) takes place, and the result of multiplication is added behind the array C'[3].

(Mul_add in Accordance with the Embodiment of the Present Invention)

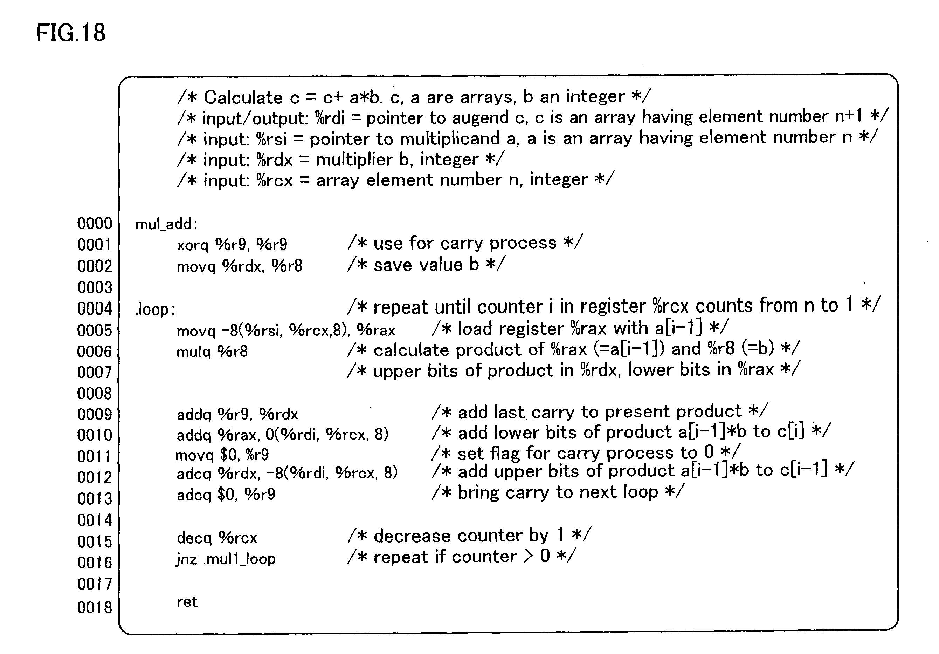

Fig. 18 shows contents of mul_add of AMD 64 as an example of CPU 3 including flag register 57. This figure shows an assembler routine called by mul_add(c, a, b, n) from C language.
Here, mul_add(c, a, b, n) is an instruction of multiplying an array a having the number of elements n in main memory 6 and an array b having the number of elements n in main memory 6, and adding the result of multiplication in an array c having the number of elements n+1 in main memory 6.
When mul_add(c, a, b, n) is called, control unit 53 sets a pointer to the array c in register %rdi, sets a pointer to the array a in register %rsi, sets a pointer to the array b in register %rdx, and sets the value n in register %rcx for holding the value of a counter i.
On the first line, control unit 53 sets the value of register %r9 for holding the information indicating presence/absence of a carry to "0" (that is, no carry), and initializes the value of carry flag CF in flag register 57 to "0" (that is, no carry).
On the second line, control unit 53 stores the value of multiplier b in register %rdx in register %r8.
On the fifth line, control unit 53 loads register %rax with the value a[i-1] in main memory 6.
On the sixth line, control unit 53 multiplies the data (=a[i-1]) in register %rax by the data (= b) in register %r8. Upper bits of the multiplication result are stored in register %rdx and lower bits of the multiplication result are stored in register %rax.
On the ninth line, operator executes addition without carry. Specifically, operator 54 adds the data representing presence/absence of a carry in the last loop stored in register %r9 and the upper bits of the multiplication result stored in register %rdx, and stores the result of addition in register %rdx. No carry occurs in this addition and, therefore, carry flag CF in flag register 57 is "0".

On the tenth line, operator 54 executes addition without carry. Specifically, operator adds lower bits of the multiplication result stored in register %rax and the array c[i] in main memory 6, and stores the result of addition in array c[i] in main memory 6. If a carry occurs in this addition, carry flag CF will be "1", and if no carry occurs, carry flag CF will be "0".

On the eleventh line, control unit 53 sets the value of register %r9 for holding the information indicating presence/absence of a carry to "0" (that is, no carry).

On the twelfth line, operator 54 executes addition with carry. Specifically, operator 54 adds the value of carry flag CF in flag register 57, the upper bits of multiplication result stored in register %rdx and the array c[i-1] in main memory 6, stores the result of addition in array c[i-1] in main memory 6, and if there is a carry in the addition, sets the value of carry flag CF in flag register 57 to "1" and if there is no carry, sets the value of carry flag CF in flag register 57 to "0".

On the thirteenth line, operator 54 executes addition with carry. Specifically, operator 54 adds the immediate value "0", the information indicating presence/absence of carry in register %r9 and the value of carry flag CF in flag register 57, and stores the result of addition in register %r9. Since no carry occurs in this addition, carry flag CF in flag register 57 is "0".

On the fifteenth line, operator 54 decreases the counter i by "1".

On the sixteenth line, control unit 53 causes control flow to exit a loop if the value of counter i is "0" and to return to the beginning of the loop if counter i is not "0".

(Reference: mul_add not Using Carry Flag)

Next, for comparison, mul_add in Alpha, as an example of CPU 3 not having flag register CF, will be described.

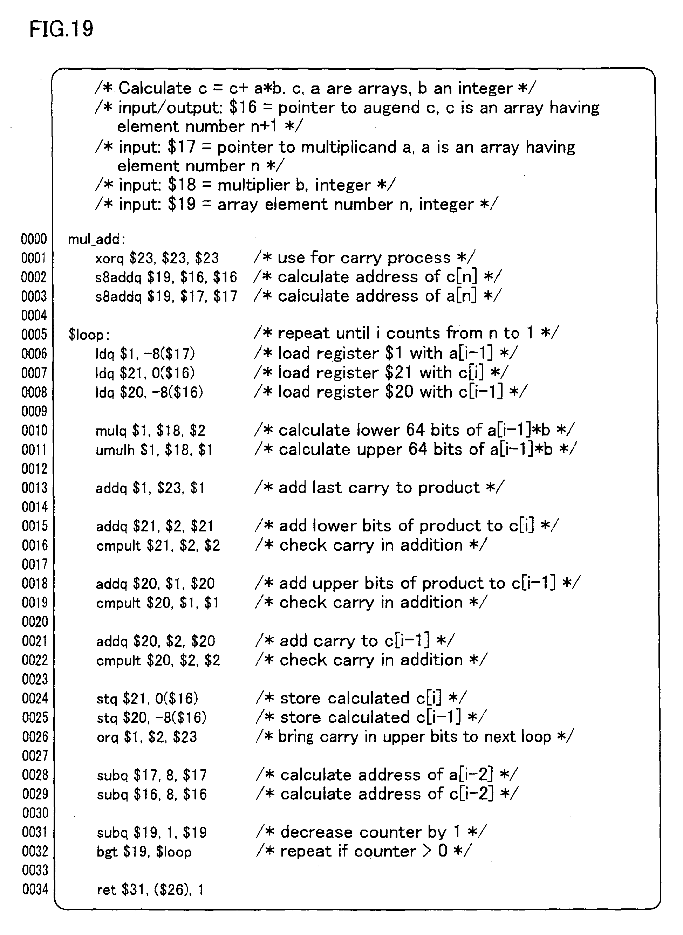

Fig. 19 shows contents of mul_add by Alpha. It shows an assembler routine called by mul_add(c, a, b, n) from C language.

Here, mul_add(c, a, b, n) is a routine of multiplying an array a having the number of elements n in main memory 6 and an array b having the number of elements n in main memory 6, and adding the result of multiplication in an array c having the number of elements n+1 in main memory 6.

When mul_add(c, a, b, n) is called, control unit 53 sets the value n in register $19 for holding the value of a counter i, sets a pointer to the array a in register $17, sets a pointer to the array b in register $18, and sets a pointer to the array c in register $16.

On the first line, control unit 53 sets the value of register $23 for holding the information indicating presence/absence of a carry to "0" (that is, no carry).

On the second line, control unit 53 calculates an address of array c[n], and stores it in register $16.

On the third line, control unit 53 calculates an address of array a[n], and stores it in register $17.

On the sixth line, control unit 53 loads register $1 with the value a[i-1] in main memory 6.

On the seventh line, control unit 53 loads register $21 with the value c[i] in main memory 6.

On the eighth line, control unit 53 loads register $20 with the value c[i-1] in main memory 6.

On the tenth line, operator 54 multiplies a[i-1] in register $1 by b in register $18, and stores the value of lower 64 bits of the multiplication result in register $2.

On the eleventh line, operator 54 multiplies a[i-1] in register $1 by b in register $18, and stores the value of upper 64 bits of the multiplication result in register $1.

On the thirteenth line, operator 54 adds the upper 64 bits of the multiplication result in register $1 and the data indicating presence/absence of carry in the last loop stored in register $23, and stores the result of addition in register $1.

On the fifteenth line, operator 54 adds the lower 64 bits of multiplication result in register $2 and c[i] in register $21, and stores the result in register $21.

On the sixteenth line, control unit 53 determines whether there has been a carry in the addition of the fifteenth line. Specifically, if the data (= c[i]) in register $21 is smaller than the data in register $2, it is understood that there has been a carry and, therefore, control unit 53 stores "1" in register $2 and otherwise, since it is understood that there has been no carry, stores "0" in register $2.

On the eighteenth line, operator 54 adds the upper 64 bits (with carry-processed on the thirteenth line) as the result of multiplication in register $1 and c[i-1] in register $20, and stores the result in register $20.

On the nineteenth line, control unit 53 determines whether there has been a carry in the addition of the eighteenth line. Specifically, if the data (= c[i-1]) in register $20 is smaller than the data in register $1, it is understood that there has been a carry and, therefore, control unit 53 stores "1" in register $1 and otherwise, since it is understood that there has been no carry, stores "0" in register $1.

On the twenty-first line, operator 54 adds the data indicating presence/absence of a carry in the addition of the fifteenth line in register $2 and c[i-1] (after addition of upper 64 bits) in register $20, and stores the result in register $20.

On the twenty-second line, control unit 53 determines whether there has been a carry in the addition of the twenty-first line. Specifically, if the data (= $c_{i-1}$) in register $20 is smaller than the data in register $2, it is understood that there has been a carry and, therefore, control unit 53 stores "1" in register $2 and otherwise, since it is understood that there has been no carry, stores "0" in register $2.

On the twenty-fourth line, control unit 53 saves $c_i$ in register $21 in an area in main memory 6.

On the twenty-fifth line, control unit 53 saves $c_{i-1}$ in register $20 in an area in main memory 6.

On the twenty-sixth line, operator 54 stores a logical sum of the data in register $1 and the data in register $2 in $23, whereby the result of carry determination on the nineteenth line is integrated with the result of carry determination on the twenty-second line. The results of determination can be integrated in this manner, since the data in register $1 and the data in register $2 could never be both "1".

On the twenty-eighth line, control unit 53 calculates an address of array $a_{i-2}$, and stores it in register S17.

On the twenty-ninth line, control unit 53 calculates an address of array $c_{i-2}$, and stores it in register S16.

On the thirty-first line, operator 54 decreases the counter i by "1".

On the thirty-second line, control unit 53 causes control flow to exit a loop if the value of counter i is "0" and to return to the beginning of the loop if counter i is not "0".

(Comparison of mul_add and Multiplication Process)

When we compare Fig. 18 and Fig. 19, it is noted that in Fig. 18, the number of instructions in the loop is 7 while in Fig. 19, the number of instructions in the loop is 18. From the foregoing, it can be understood that by utilizing a carry flag CF as in the present embodiment, the number of instructions for mul_add as a multiplication of an array and an element of an array can be made smaller than when it is not utilized. As a result, by utilizing carry flag CF, the number of instructions for a multiplication of arrays representing the fraction can also be reduced.

(Process of Division)

In an embodiment of the present invention, division is performed by classical Newton's method. In order to calculate x = a/b, first, 1/b is calculated, and the result is multiplied by a. In order to calculate 1/b, Newton's method is applied to f(x) = (1/x) - b. Here, recurrence equation of Newton's method is given, for example, by Equations (45) and (46) below.

$$x0 = 1 \ \ldots \ (45)$$

$$xn+1 = xn - f(xn)/f'(xn) = xn \times (2 - b \times xn) \ \ldots \ (46)$$

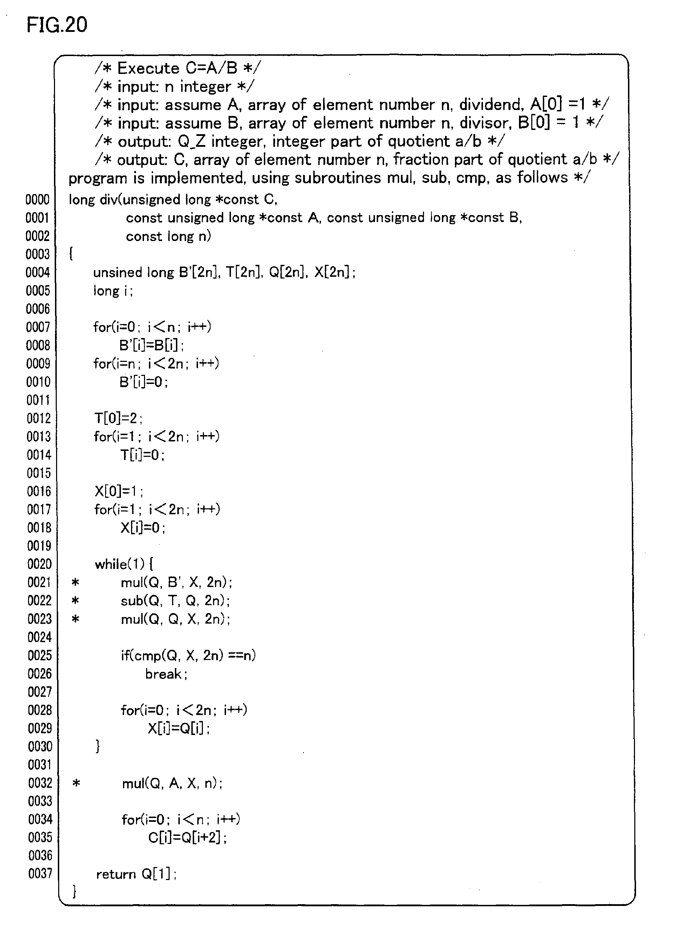

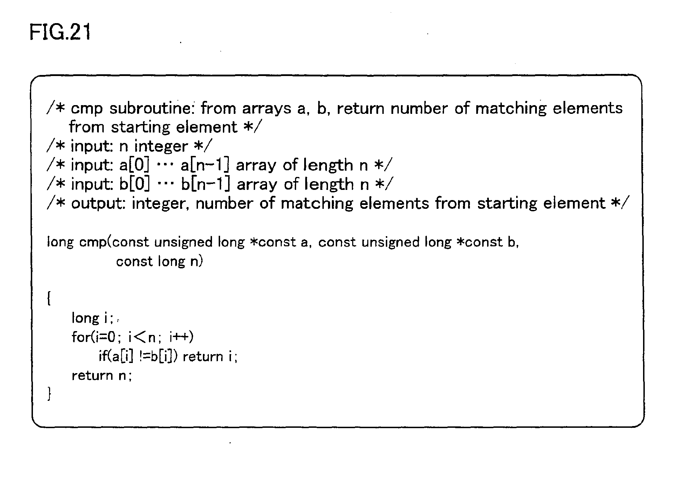

Fig. 20 shows contents of the process of division using Newton's method. Fig. 21 represents contents of a subroutine cmp in Fig. 20.

In Fig. 20, the twenty-first line represents a routine for executing multiplication of $q = b \times xn$.

The twenty-second line represents a routine for executing subtraction of q = (2-q).

The twenty-third line represents a routine for executing multiplication of $q = xn \times q$.

On the twenty-fifth and twenty-sixrth line, if xn + 1 (= q) is equal to xn, the control exits the loop of the twentieth to thirtieth lines.

The thirty-second line represents a routine of multiplying xn, that is, (1/b), by a.

(Comparison of Division Process)

If AMD 64 is used as CPU3 for executing the multiplication routine mul on the twenty-first, twenty-third and thirty-second lines of Fig. 20, the operation is as shown in Figs. 16 and 18, and if Alpha is used as CPU3 for executing the routine, the operation is as shown in Figs. 16 and 19. From the comparison of these, it is understood that the number of instructions is smaller when AMD 64 is used as CPU3.

Further, if AMD 64 is used as CPU3 for executing the subtraction routine sub on the twenty-second line of Fig. 20, the operation is as shown in Fig. 13, and if Alpha is used as CPU3, the operation is as shown in Fig. 14. From the comparison of these, it is understood that the number of instructions is smaller when AMD 64 is used as CPU3. From the foregoing, it can be understood that by utilizing a carry flag CF as in the present embodiment, the number of instructions for the division process of fraction can be made smaller than when it is not utilized.

(Results of Experiment on Calculation Accuracy)

In the present embodiment, the fraction is represented by 64 $\times$ n bits. By increasing the value n, the value of the regularization parameter a that influences calculation accuracy of $f_{a,s}^{(n)}(t)$ can be made smaller. In the following, results of an experiment on how $f_{a,s}^{(n)}(t)$ changes with the magnitude of the regularization parameter a will be described. If f(t) is a step function, Laplace transform image F(pi) can be obtained analytically. The experiment was conducted utilizing this characteristic.

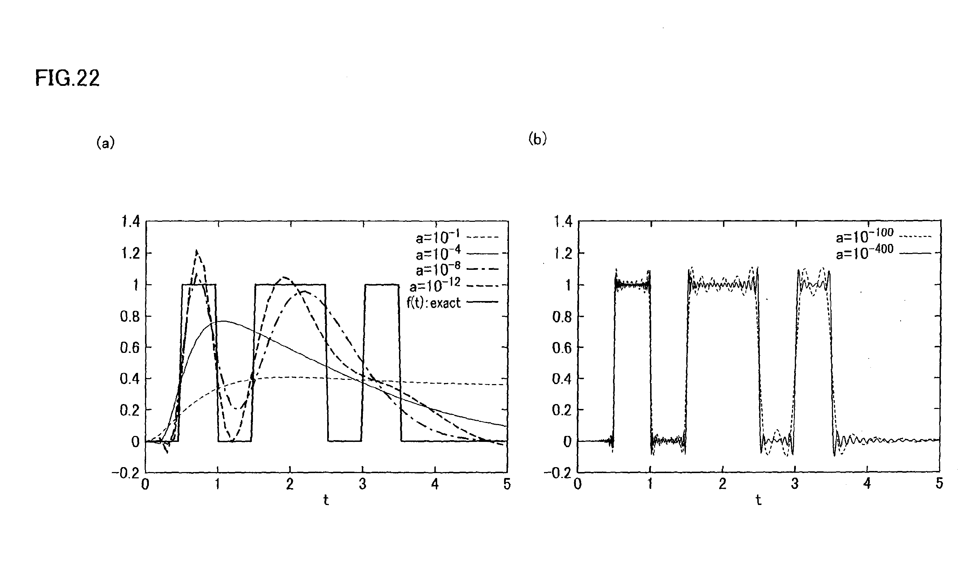

Fig. 22(a) shows results of calculation $f_{a,s}^{(n)}(t)$ when the regularization parameter a is a = $10^{-1}$, $10^{-4}$, $10^{-8}$ and $10^{-12}$. Fig. 22(b) shows results of calculation $f_{a,s}^{(n)}(t)$ when the regularization parameter a is a = $10^{-100}$ and $10^{-400}$.

From these figures, it can be understood that calculation accuracy of $f_{a,s}^{(n)}(t)$ increases as the regularization parameter a is made smaller. In the case of step function shown in Fig. 22, it is understood that effective inverse Laplace transform cannot be attained unless the regularization parameter a is as small as about $10^{-100}$. In order to have such a small value for the regularization parameter a and to calculate the inverse Laplace transform image within a practical time period, the multiple precision arithmetic with the number of instructions significantly reduced by the introduction of carry flag CF as described in the embodiments of the present invention is indispensable.

Further, the embodiments of the present invention are **characterized in that** the value of inverse Laplace transform can be calculated with high accuracy even for a function where f(0) is not 0, by using Equation (10) modified from Equation (6). In the following, results of an experiment on how $f_{a,s}^{(n)}(t)$ changes with the magnitude of the mollifier parameter s will be described. Here, a function f(t) given by Equations (47) and (48) was used for the experiment.

$$\text{Where } 0 < t < 1, \text{ f(t)} = 1 \ \dots \ (47)$$

$$\text{Where } 1 < t, \text{ f(t)} = 0 \ \dots \ (48).$$

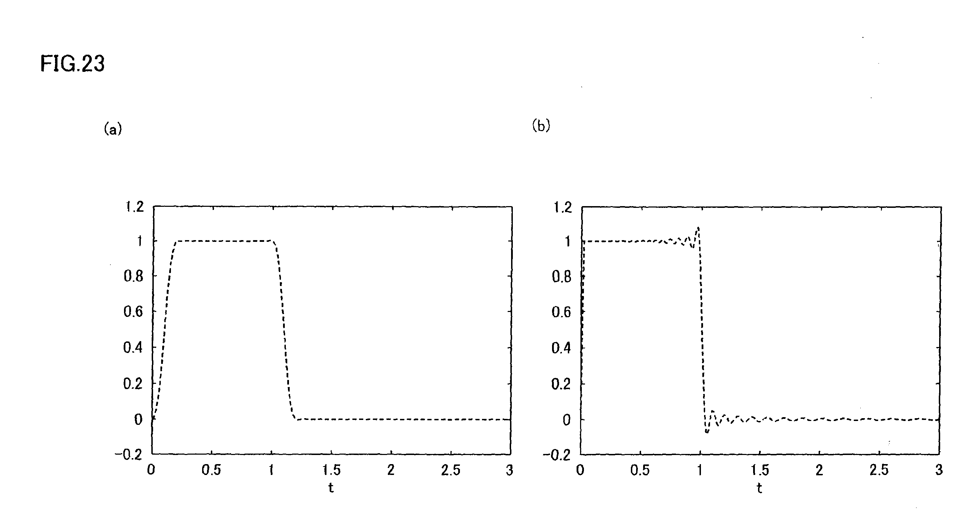

Figs. 23(a) shows the result of calculation $f_{a,s}^{(n)}(t)$ when s = 0.1, and Fig. 23(b) shows the result of calculation $f_{a,s}^{(n)}(t)$ when s = 0.01.

From these figures, it can be understood that calculation accuracy of $f_{a,s}^{(n)}(t)$ increases as the mollifier parameter s is made smaller. By setting the mollifier parameter s to an appropriate value in accordance with the intended application, it is possible to calculate the value of inverse Laplace transform with high accuracy even for a function where f(0) is not 0.

[Fourth Embodiment]

The fourth embodiment relates to a configuration in which the process for forming H table and the process for calculating numerical solution of inverse Laplace transform are performed by separate devices.

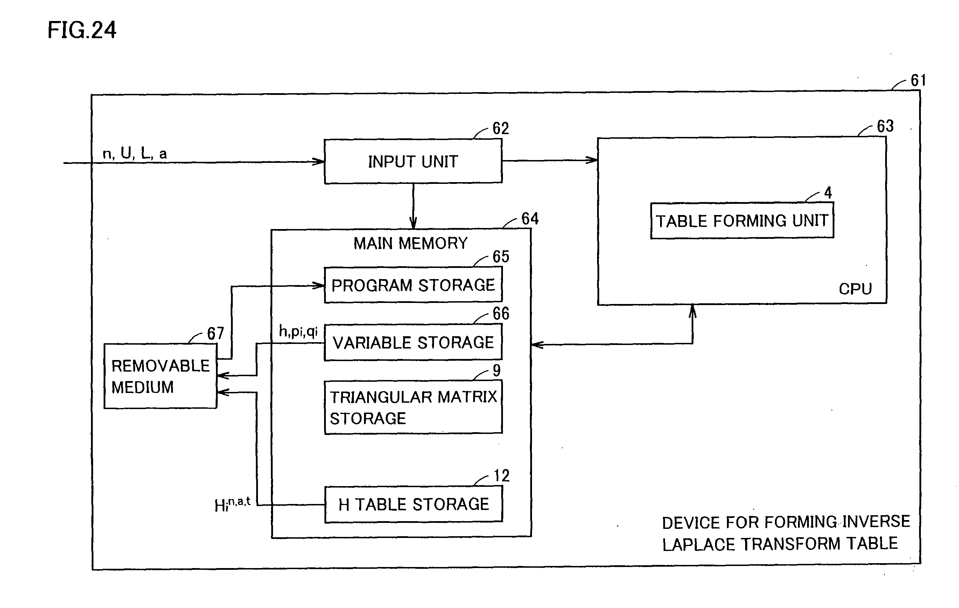

Fig. 24 shows a configuration of a device for forming a table for inverse Laplace transform, forming the H table. The device for forming inverse Laplace transform table shown in Fig. 24 is implemented by a computer, and in Figs. 24, the same components as in Fig. 1 are denoted by the same reference characters.

Referring to Fig. 24, different from the first to third embodiments, CPU 63 functions only as table forming unit 4.

Different from the first to third embodiments, to input unit 62, the number n of samples, upper limit U, lower limit L, and the regularization parameter a necessary for forming the H table are input.

Different from the first to third embodiments, a table formation program for inverse Laplace transform to cause the computer to function as table forming unit 4 is stored in program storage 65. The table formation program for inverse Laplace transform may be installed from the outside through a removable medium 67, which is a computer readable recording medium such as a USB (Universal Serial Bus) memory or a CD-ROM (Compact Disk-Read Only Memory).

Different from the first to third embodiments, only the variables necessary for forming the H table are stored in variable storage 66.

The H table stored in H table storage 12 in main memory 64 and the variables h, pi, qi (i = 0, 1, 2, ... n) stored in variable storage 66 can be output to removable medium 67. Therefore, by feeding the H table and the variables stored in removable medium 67 to a main memory of another device to be stored therein, it becomes possible for the said another device to utilize the H table and variables h, pi and qi.

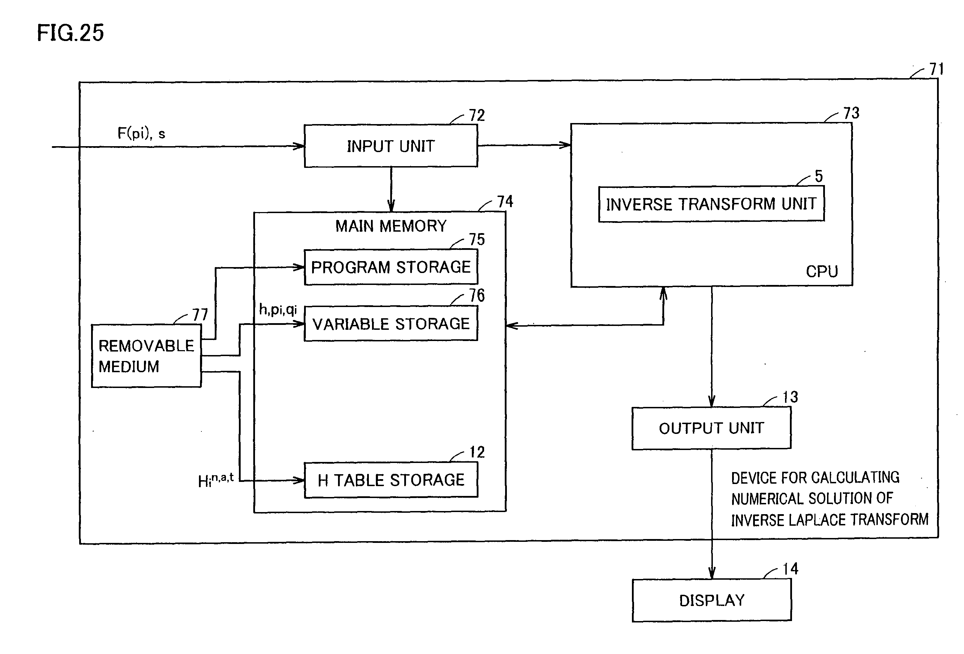

Fig. 25 shows a configuration of a device for calculating numerical solution of inverse Laplace transform, calculating a numerical solution of inverse Laplace transform. The device for calculating numerical solution of inverse Laplace transform shown in Fig. 25 is implemented by a computer, and in Fig. 25, the same components as in Fig. 1 are denoted by the same reference characters.

Referring to Fig. 25, different from the first to third embodiments, CPU 73 functions only as inverse transform unit 5.

Different from the first to third embodiments, to input unit 72, Laplace transform image F(pi) and the mollifier parameter s necessary for calculating the numerical solution of inverse Laplace transform are input.

Different from the first to third embodiments, in program storage 75, a program for calculating numerical solution of inverse Laplace transform to cause the computer to function as inverse transform unit 5 and output unit 13 is stored. The program for calculating numerical solution of inverse Laplace transform may be installed from the outside through a removable medium 77, which is a computer readable recording medium such as a USB (Universal Serial Bus) memory or a CD-ROM (Compact Disk-Read Only Memory).

The H table and variables h, pi and qi (i = 0, 1, 2, ... n) stored in removable medium 77 may be output to H table storage 12 and variable storage 76 in main memory 74. Therefore, variables h, pi and qi (i = 0, 1, 2, ... n) and the H table formed by the device of Fig 24 and stored in removable medium 67 can be used in the device of Fig. 25.

As described above, in the fourth embodiment, formation of the H table and calculation of the numerical solution of inverse Laplace transform can be done by separate devices. Therefore, it is possible to form the H table using a high-speed computer and to provide the table to a user, and it is possible for the user to calculate the numerical solution of inverse Laplace transform using the provided H table on his/her own computer.

(Modifications)

The present invention is not limited to the embodiments described above, and it includes, by way of example, the following modifications.

(1) Information to be described in the table

In the fourth embodiment of the present invention, the device for forming a table for inverse Laplace transform shown in Fig. 24 outputs the H table describing the solutions $\{H_i^{n,a,t}: i = 0, 1, 2, ..., n\}$ of the simultaneous equations and h, pi and qi (i = 0, 1, 2, ... n) to the removable medium, to be used by the device for calculating numerical solution of inverse Laplace transform of Fig. 25. The invention, however, is not limited to the above. By way of example, the device for forming a table for inverse Laplace transform may output only the H table to the removable medium, and the device for calculating numerical solution of inverse Laplace transform, receiving n, U and L as inputs, may re-calculate hi, pi and qi. Further, the device for forming a table for inverse Laplace transform may calculate $h \times pi \times H_j^{n,a,t} \times qi$ and output a table describing the result of calculation and pi to a removable medium, and utilizing these outputs, the device for calculating numerical solution of inverse Laplace transform may perform calculation of Equation (38) in a simple manner.

(2) Method of Discretization

Various methods may be applicable to the discretization of Equations (22) to (24) described in the embodiments above. Equations (25) to (36) are merely an example, and other method may be used.

(3) 64-bit Register

In the third embodiment of the present invention, an example has been described in which the CPU includes registers of 64-bit length. It is only an example and a register having K-bit length (K is a natural number), such as a register of 16-bit length, 32-bit length or 128-bit length may be used.

(4) LU Decomposition

In the first embodiment of the present invention, coefficient matrix A forming the simultaneous equations obtained by discretization of an integral equation of the second kind is subjected to LU decomposition. It is not limiting, and any method of decomposition may be used, provided that decomposition to a product of lower triangular matrix and upper triangular matrix is possible.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

**Claims**

1. An inverse Laplace transform program, for calculating a numerical solution of an original function of a Laplace transform image under a given regularization parameter and mollifier parameter, causing a computer to execute the steps of:

in a weighted reproducing kernel Hilbert space formed of an absolutely continuous function that is zero at an origin, calculating solutions of simultaneous equations obtained by discretization of an integral equation of the second kind derived from Tikhonov regularization method with a weighted square integrable space used as an observation space, and forming a table describing information including a numerical solution of said integral equation of the second kind based on the solutions of said simultaneous equations;
saving said formed table in a storage;
obtaining, by numerical calculation, an inner product, in the weighted square integrable space, of the numerical solution of said integral equation of the second kind and a Laplace transform image multiplied by a mollifier function with reference to the table in said storage, and thereby calculating the numerical solution of the original function; and
outputting the numerical solution of said original function.

2. The inverse Laplace transform program according to claim 1, wherein
by representing the regularization parameter as a,
the mollifier parameter as s,
a Laplace transform image of an arbitrary function g as Lg,
a Laplace transform image of the original function of which numerical solution is to be calculated as F(p), and
the mollifier function as $R_s(p)$,
a norm of weighted reproducing kernel Hilbert space $H_k$ formed of an absolutely continuous function f attaining zero at the origin is given by Equation (A1)

[Eq 1]

$$\|f\|_{H_k} = \left\{ \int_0^\infty |f'(t)|^2 \frac{1}{\rho(t)} dt \right\}^{1/2} \quad \ldots (A1)$$

reproducing a kernel K(t, t') in said weighted reproducing kernel Hilbert space $H_k$ is given by Equation (A2)

[Eq 2]

$$K(t, t') = \int_0^{\min(t,t')} \rho(\xi)\, d\xi \quad \ldots (A2)$$

said weighted square integrable space is given by $L_2(R^+, u(p)dp)$, $\rho(t)$ and $u(p)$ satisfy a condition of Formula (A3)

[Eq 3]

$$\int_0^\infty |(Lf)(p)p|^2 u(p)dp \le \frac{1}{2}\|f\|_{H_K}^2 \quad \ldots (A3)$$

said integral equation of the second kind is given by Equation (A4)

[Eq 4]

$$aH_a(\xi, t) + \int_0^\infty H_a(p, t)\{p\xi L(LK.)(p)\}u(p)dp = H(\xi, t) \qquad \ldots(A4)$$

and said inner product is given by Formula (A5)

[Eq 5]

$$\int_0^\infty F(\xi) R_s(\xi)\xi H_a(\xi, t)u(\xi)d\xi \qquad \ldots(A5).$$

3. The inverse Laplace transform program according to claim 2, wherein $\rho(t)$ is given by Equation (A6), $u(p)$ is given by Equation (A7), and $R_s(p)$ is given by Equation (A8):

[Eq 6]

$$\rho(t) = (t+1)^2 \qquad \ldots(A6)$$

$$u(p) = \exp\left(-p - \frac{1}{p}\right) \qquad \ldots(A7)$$

$$R_s(p) = \frac{1}{s^2 p^2}\{\exp(-sp) - 1\}^2 \qquad \ldots(A8).$$

4. The inverse Laplace transform program according to claim 3, wherein
said computer includes
a general purpose register of K-bit length (K is a natural number),
a flag register storing a flag indicating whether a carry or a borrow occurred by an immediately preceding operation, and
an operator performing an operation dependent on whether or not a carry or a borrow occurred by the immediately preceding operation with reference to said flag; and
said step of forming said table and said step of calculating the numerical solution of said original function include the step of representing a fraction of a variable as an object of said numerical calculation by multiple precision expression of K × N bits (N is a natural number not smaller than 2), dividing the fraction of said variable K-bits by K-bits, and causing said operator to perform an operation, using said general-purpose register, successively on said divided fraction, starting from lower bit side.

5. The inverse Laplace transform program according to claim 3, wherein
said simultaneous equations are represented in the form of Ax = b, where A is a coefficient matrix having each element independent of t, x is a vector having solutions of the simultaneous equations as elements, and b is a vector having each element dependent on t;
said step of forming said table includes the steps of
calculating an inverse matrix $A^{-1}$ of said matrix A, and storing elements of said inverse matrix $A^{-1}$ in said storage, and
for every t in a calculation range, calculating solutions of said simultaneous equations, based on values of elements of said inverse matrix $A^{-1}$ stored in said storage.

6. The inverse Laplace transform program according to claim 3, wherein
said simultaneous equations are represented in the form of Ax = b, where A is a coefficient matrix having each element independent of t, x is a vector having solutions of the simultaneous equations as elements, and b is a vector having each element dependent on t;
said step of forming said table includes the steps of
decomposing said matrix A to a product of an upper triangular matrix and a lower triangular matrix, and storing elements of said upper triangular matrix and said lower triangular matrix in said storage, and
for every t in a calculation range, calculating solutions of said simultaneous equations, based on values of elements of said upper triangular matrix and said lower triangular matrix stored in said storage.

7. The inverse Laplace transform program according to claim 3, wherein
said step of forming said table includes the steps of
calculating variables h, xj, pj, qj, aij and H(pj, t) in accordance with Equations (A9) to (A14) from said regularization parameter a, said mollifier parameter s and other parameters n, U and L

[Eq 7]

$$h = \frac{U - L}{n} \qquad \qquad \ldots(A9)$$

$$x_j = L + jh \qquad (j = 0, 1, 2, \cdots, n) \qquad \ldots(A10)$$

$$p_j = \exp\left(\frac{\pi}{2}\sinh x_j\right) \qquad (j = 0, 1, 2, \cdots, n) \qquad \ldots(A11)$$

$$q_j = p_j \cosh x_j \qquad (j = 0, 1, 2, \cdots, n) \qquad \ldots(A12)$$

$$a_{ij} = \frac{\pi}{2}h\frac{1}{(p_i + p_j)^3}\left\{1 + (p_i + p_j) + \frac{(p_i + p_j)^2}{2}\right\}\exp\left(-p_j - \frac{1}{p_j}\right)\ldots(A13)$$

$$\begin{pmatrix} i = 0, 1, 2, \cdots, n \\ j = 0, 1, 2, \cdots, n \end{pmatrix}$$

$$H(p_j, t) = \frac{2}{p_j^3}\left[1 + p_j + \frac{p_j^2}{2} - \exp(-tp_j)\left\{1 + p_j(t+1) + \frac{p_j^2(t+1)^2}{2}\right\}\right]$$

$$\ldots(A14)$$

$$(j = 0, 1, 2, \cdots, n, \quad t = t_0, t_1, \cdots, t_m),$$

with said simultaneous equations being represented by Equation (A15), performing Cholesky decomposition of a matrix A represented by Equation (A16) and calculating solutions of Equation (A15)

[Eq 8]

$$
\begin{pmatrix}
a/q_0 + a_{00} & a_{01} & a_{02} & \cdots & a_{0n} \\
a_{10} & a/q_1 + a_{11} & a_{12} & \cdots & a_{1n} \\
a_{20} & a_{21} & a/q_2 + a_{22} & \cdots & a_{2n} \\
\vdots & \vdots & & \ddots & \vdots \\
a_{n0} & a_{n1} & a_{n2} & \cdots & a/q_n + a_{nn}
\end{pmatrix}
\begin{pmatrix}
H_0'^{n,a,t} \\
H_1'^{n,a,t} \\
H_2'^{n,a,t} \\
\vdots \\
H_n'^{n,a,t}
\end{pmatrix}
=
\begin{pmatrix}
H(p_0,t) \\
H(p_1,t) \\
H(p_2,t) \\
\vdots \\
H(p_n,t)
\end{pmatrix}
$$

...(A15)

$$
A =
\begin{pmatrix}
a/q_0 + a_{00} & a_{01} & a_{02} & \cdots & a_{0n} \\
a_{10} & a/q_1 + a_{11} & a_{12} & \cdots & a_{1n} \\
a_{20} & a_{21} & a/q_2 + a_{22} & \cdots & a_{2n} \\
\vdots & \vdots & & \ddots & \vdots \\
a_{n0} & a_{n1} & a_{n2} & \cdots & a/q_n + a_{nn}
\end{pmatrix}
$$

...(A16),

and
in accordance with Equation (A17), calculating a numerical solution $\{H_i^{n,a,t} : i = 0, 1, 2,...,n\}$ of said integral equation of the second kind from the solutions of Equation (A15), and forming a table describing information including the numerical solution of said integral equation of the second kind

[Eq 9]

$$
H_i^{\,n,a,t} = \frac{H_i'^{n,a,t}}{q_i} \qquad (i = 0, 1, 2, \cdots, n) \qquad ...(A17);
$$

and
said step of calculating the numerical solution of said original function includes the step of calculating the numerical solution $f_{a,s}^{(n)}(t)$ of said original function from a Laplace transform image $F(pj)$, in accordance with Equation (A18), with reference to said table

[Eq 10]

$$
f_{a,s}^{(n)}(t) = \frac{\pi}{2} h \sum_{j=0}^{n} F(p_j) \frac{1}{s^2 p_j^{\,2}} \left\{ \exp(-sp_j) - 1 \right\}^2 p_j H_j^{\,n,a,t} p_j \cosh x_j \exp\left( -p_j - \frac{1}{p_j} \right)
$$

...(A18).

8. A program for forming a table, for calculating a numerical solution of an original function of a Laplace transform image under a given regularization parameter and mollifier parameter, causing a computer to execute the steps of:

in a weighted reproducing kernel Hilbert space formed of an absolutely continuous function that is zero at an origin, calculating solutions of simultaneous equations obtained by discretization of an integral equation of the second kind derived from Tikhonov regularization method with a weighted square integrable space used as an observation space, and forming a table describing information including a numerical solution of said integral equation of the second kind based on the solutions of said simultaneous equations; and saving said formed table in a storage.

9. The program for forming a table according to claim 8, wherein
by representing the regularization parameter as a,
the mollifier parameter as s, and
a Laplace transform image of an arbitrary function g as Lg,
a norm of weighted reproducing kernel Hilbert space $H_k$ formed of an absolutely continuous function f attaining zero at the origin is given by Equation (A19)

[Eq 11]

$$\|f\|_{H_k} = \left\{ \int_0^\infty |f'(t)|^2 \frac{1}{\rho(t)} dt \right\}^{1/2} \qquad \dots (A19)$$

reproducing a kernel K(t, t') in said weighted reproducing kernel Hilbert space $H_k$ is given by Equation (A20)

[Eq 12]

$$K(t, t') = \int_0^{\min(t, t')} \rho(\xi) \; d\xi \qquad \dots (A20)$$

said weighted square integrable space is given by $L_2(R^+, u(p)dp)$, $\rho(t)$ and u(p) satisfy a condition of Formula (A21)

[Eq 13]

$$\int_0^\infty |(Lf)(p)p|^2 u(p)dp \leq \frac{1}{2} \|f\|_{H_K}^2 \qquad \dots (A21);$$

and
said integral equation of the second kind is given by Equation (A22)

[Eq 14]

$$aH_a(\xi, t) + \int_0^\infty H_a(p, t)\{p\xi L(LK.)(p)\}u(p)dp = H(\xi, t) \qquad \dots (A22).$$

10. The program for forming a table according to claim 9, wherein
$\rho(t)$ is given by Equation (A23) and u(p) is given by Equation (A24)

[Eq 15]

$$\rho(t) = (t+1)^2 \qquad \dots (A23)$$

$$u(p) = \exp\left(-p - \frac{1}{p}\right) \qquad \qquad \ldots(A24).$$

**11.** The program for forming a table according to claim 10, wherein
said computer includes
a general purpose register of K-bit length (K is a natural number),
a flag register storing a flag indicating whether a carry or a borrow occurred by an immediately preceding operation, and
an operator performing an operation dependent on whether or not a carry or a borrow occurred by the immediately preceding operation with reference to said flag; and
said step of forming said table includes the step of representing a fraction of a variable as an object of said numerical calculation by multiple precision expression of K $\times$ N bits (N is a natural number not smaller than 2), dividing the fraction of said variable K-bits by K-bits, and causing said operator to perform an operation, using said general-purpose register, successively on said divided fraction, starting from lower bit side.

**12.** The program for forming a table according to claim 10, wherein
said simultaneous equations are represented in the form of Ax = b, where A is a coefficient matrix having each element independent of t, x is a vector having solutions of the simultaneous equations as elements, and b is a vector having each element dependent on t;
said step of forming said table includes the steps of
calculating an inverse matrix $A^{-1}$ of said matrix A, and storing elements of said inverse matrix $A^{-1}$ in said storage, and
for every t in a calculation range, calculating solutions of said simultaneous equations, based on values of elements of said inverse matrix $A^{-1}$ stored in said storage.

**13.** The program for forming a table according to claim 10, wherein
said simultaneous equations are represented in the form of Ax = b, where A is a coefficient matrix having each element independent of t, x is a vector having solutions of the simultaneous equations as elements, and b is a vector having each element dependent on t;
said step of forming said table includes the steps of
decomposing said matrix A to a product of an upper triangular matrix and a lower triangular matrix, and storing elements of said upper triangular matrix and said lower triangular matrix in said storage, and
for every t in a calculation range, calculating solutions of said simultaneous equations, based on values of elements of said upper triangular matrix and said lower triangular matrix stored in said storage.

**14.** The program for forming a table according to claim 10, wherein
said step of forming said table includes the steps of
calculating variables h, xj, pj, qj, aij and H(pj, t) in accordance with Equations (A25) to (A30) from said regularization parameter a, said mollifier parameter s and other parameters n, U and L

[Eq 16]

$$h = \frac{U - L}{n} \qquad \qquad \ldots(A25)$$

$$x_j = L + jh \qquad (j = 0, 1, 2, \cdots, n) \qquad \ldots(A26)$$

$$p_j = \exp\left(\frac{\pi}{2} \sinh x_j\right) \qquad (j = 0, 1, 2, \cdots, n) \qquad \ldots(A27)$$

$$q_j = p_j \cosh x_j \qquad (j = 0, 1, 2, \cdots, n) \qquad \ldots(A28)$$

$$a_{ij} = \frac{\pi}{2} h \frac{1}{(p_i + p_j)^3} \left\{ 1 + (p_i + p_j) + \frac{(p_i + p_j)^2}{2} \right\} \exp\left( -p_j - \frac{1}{p_j} \right) \ldots(A29)$$

$$\begin{pmatrix} i = 0, 1, 2, \cdots, n \\ j = 0, 1, 2, \cdots, n \end{pmatrix}$$

$$H(p_j, t) = \frac{2}{p_j^3} \left[ 1 + p_j + \frac{p_j^2}{2} - \exp(-tp_j) \left\{ 1 + p_j(t+1) + \frac{p_j^2(t+1)^2}{2} \right\} \right]$$

$$\ldots(A30)$$

$$(j = 0, 1, 2, \cdots, n, \quad t = t_0, t_1, \cdots, t_m),$$

with said simultaneous equations being represented by Equation (A31), performing Cholesky decomposition of a matrix A represented by Equation (A32) and calculating solutions of Equation (A31)

[Eq 17]

$$\begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \begin{pmatrix} H_0'^{n,a,t} \\ H_1'^{n,a,t} \\ H_2'^{n,a,t} \\ \vdots \\ H_n'^{n,a,t} \end{pmatrix} = \begin{pmatrix} H(p_0,t) \\ H(p_1,t) \\ H(p_2,t) \\ \vdots \\ H(p_n,t) \end{pmatrix}$$

$$\ldots(A31)$$

$$A = \begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \qquad \ldots(A32),$$

and
in accordance with Equation (A33), calculating a numerical solution $\{H_i^{n,a,t}: i = 0,1, 2,...,n\}$ of said integral equation of the second kind from the solutions of Equation (A31), and forming a table describing information including the numerical solution of said integral equation of the second kind

[Eq 18]

$$H_i^{\,n,a,t} = \frac{H_i'^{\,m,a,t}}{q_i} \qquad (i = 0, 1, 2, \cdots, n) \qquad \ldots(A33).$$

15. A program for calculating a numerical solution of inverse Laplace transform, for forming a numerical solution of an original function of a Laplace transform image using the table formed by the program for forming a table for inverse Laplace transform according to claim 8, causing a computer to execute the steps of:

receiving, as an input, the table formed by the program for forming a table for inverse Laplace transform according to claim 8, and saving the input table in a storage;
obtaining, by numerical calculation, an inner product, in the weighted square integrable space, of the numerical solution of said integral equation of the second kind and a Laplace transform image multiplied by a mollifier function with reference to the table in said storage, and thereby calculating the numerical solution of the original function; and
outputting the numerical solution of said original function.

16. A program for calculating a numerical solution of inverse Laplace transform, for forming a numerical solution of an original function of a Laplace transform image using the table formed by the program for forming a table for inverse Laplace transform according to claim 9, causing a computer to execute the steps of:

receiving, as an input, the table formed by the program for forming a table for inverse Laplace transform according to claim 9, and saving the input table in a storage;
obtaining, by numerical calculation, an inner product, in the weighted square integrable space, of the numerical solution of said integral equation of the second kind and a Laplace transform image $F(p)$ multiplied by a mollifier function $R_s(p)$, with reference to the table in said storage, and thereby calculating the numerical solution of the original function, said inner product given by Formula (A34)

[Eq 19]

$$\int_0^\infty F(\xi)\, R_s(\xi)\, \xi\, H_a(\xi, t)\, u(\xi)\, d\xi \qquad \ldots(A34);$$

and
outputting the numerical solution of said original function.

17. A program for calculating a numerical solution of inverse Laplace transform, for forming a numerical solution of an original function of a Laplace transform image using the table formed by the program for forming a table for inverse Laplace transform according to claim 10, 12, or 13, causing a computer to execute the steps of:

receiving, as an input, the table formed by the program for forming a table for inverse Laplace transform according to claim 10, 12 or 13, and saving the input table in a storage;
obtaining, by numerical calculation, an inner product, in the weighted square integrable space, of the numerical solution of said integral equation of the second kind and a Laplace transform image $F(p)$ multiplied by a mollifier function $R_s(p)$, with reference to the table in said storage, and thereby calculating the numerical solution of the original function, said mollifier function $R_s(p)$ given by Equation (A35)

[Eq 20]

$$R_s(p) = \frac{1}{s^2 p^2}\{\exp(-sp) - 1\}^2 \qquad \ldots(A35)$$

said inner product given by Formula (A36)

[Eq 21]

$$\int_0^\infty F(\xi) R_s(\xi) \xi H_a(\xi, t) u(\xi) d\xi \qquad \ldots(A36);$$

and
outputting the numerical solution of said original function.

18. A program for calculating a numerical solution of inverse Laplace transform, for forming a numerical solution of inverse Laplace transform using the table formed by the program for forming a table for inverse Laplace transform according to claim 11,
causing a computer, including a general purpose register of K-bit length (K is a natural number), a flag register storing a flag indicating whether a carry or a borrow occurred by an immediately preceding operation, and an operator performing an operation dependent on whether or not a carry or a borrow occurred by the immediately preceding operation with reference to said flag, to execute the steps of:

receiving, as an input, the table formed by the program for forming a table for inverse Laplace transform according to claim 11, and saving the input table in a storage;
obtaining, by numerical calculation, an inner product, in the weighted square integrable space, of the numerical solution of said integral equation of the second kind and a Laplace transform image F(p) multiplied by a mollifier function $R_s(p)$, with reference to the table in said storage, and thereby calculating the numerical solution of the original function, said mollifier function $R_s(p)$ given by Equation (A3 7)

[Eq 22]

$$R_s(p) = \frac{1}{s^2 p^2}\{\exp(-sp) - 1\}^2 \qquad \ldots(A37)$$

said inner product given by Formula (A38)

[Eq 23]

$$\int_0^\infty F(\xi) R_s(\xi) \xi H_a(\xi, t) u(\xi) d\xi \qquad \ldots(A38);$$

and
outputting the numerical solution of said original function;
said step of calculating the numerical solution of the original function includes the step of representing a fraction of a variable as an object of said numerical calculation by multiple precision expression of K × N bits (N is a natural number not smaller than 2), dividing the fraction of said variable K-bits by K-bits, and causing said operator to perform an operation, using said general-purpose register, successively on said divided fraction, starting from lower bit side.

**19.** A program for calculating a numerical solution of inverse Laplace transform, for forming a numerical solution of inverse Laplace transform using the table formed by the program for forming a table for inverse Laplace transform according to claim 14, causing a computer to execute the steps of:

receiving, as an input, the table formed by the program for forming a table for inverse Laplace transform according to claim 14, and saving the input table in a storage;

calculating the numerical solution $f_{a,s}^{(n)}(t)$ of said original function from the numerical solution of said integral equation of the second kind and a Laplace transform image F(pj), with reference to the table in said storage unit, in accordance with Equation (A39)

[Eq 24]

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{n,a,t} p_j \cosh x_j \exp\left( -p_j - \frac{1}{p_j} \right)$$

$$\ldots (A39);$$

and

outputting the numerical solution of said original function.

**20.** An inverse Laplace transform device, for calculating a numerical solution of an original function of a Laplace transform image under a given regularization parameter and mollifier parameter, comprising:

a table forming unit calculating, in a weighted reproducing kernel Hilbert space formed of an absolutely continuous function that is zero at an origin, solutions of simultaneous equations obtained by discretization of an integral equation of the second kind derived from Tikhonov regularization method with a weighted square integrable space used as an observation space, and forming a table describing information including numerical solution of said integral equation of the second kind based on the solutions of said simultaneous equations;

a storage storing said formed table;

an inverse transform unit obtaining, by numerical calculation, an inner product, in the weighted square integrable space, of the numerical solution of said integral equation of the second kind and a Laplace transform image multiplied by a mollifier function with reference to the table in said storage, and thereby calculating the numerical solution of the original function; and

an output unit outputting the numerical solution of said original function.

**21.** The inverse Laplace transform device according to claim 20, wherein
by representing the regularization parameter as a,
the mollifier parameter as s,
a Laplace transform image of an arbitrary function g as Lg,
a Laplace transform image of the original function of which numerical solution is to be calculated as F(p), and the mollifier function as $R_s(p)$,
a norm of weighted reproducing kernel Hilbert space $H_k$ formed of an absolutely continuous function f attaining zero at the origin is given by Equation (A40)

[Eq 25]

$$\|f\|_{H_k} = \left\{ \int_0^\infty |f'(t)|^2 \frac{1}{\rho(t)} dt \right\}^{1/2} \qquad \ldots (A40)$$

reproducing a kernel K(t, t') in said weighted reproducing kernel Hilbert space $H_k$ is given by Equation (A41)

[Eq 26]

$$K(t, t') = \int_0^{\min(t,t')} \rho(\xi) \ d\xi \qquad \qquad \ldots (A41)$$

said weighted square integrable space is given by $L_2(R^+, u(p)dp)$,
$\rho$ (t) and u(p) satisfy a condition of Formula (A42)

[Eq 27]

$$\int_0^\infty \left| (Lf)(p)p \right|^2 u(p)dp \leq \frac{1}{2} \| f \|_{H_K}^2 \qquad \qquad \ldots (A42)$$

said integral equation of the second kind is given by Equation (A43)

[Eq 28]

$$aH_a(\xi, t) + \int_0^\infty H_a(p, t)\{p\xi L(LK.)(p)\}u(p)dp = H(\xi, t) \qquad \ldots (A43)$$

and said inner product is given by Formula (A44)

[Eq 29]

$$\int_0^\infty F(\xi) R_s(\xi)\xi H_a(\xi, t)u(\xi)d\xi \qquad \qquad \ldots (A44).$$

**22.** The inverse Laplace transform device according to claim 21, wherein $\rho(t)$ is given by Equation (A45), u(p) is given by Equation (A46), and $R_s(p)$ is given by Equation (A47):

[Eq 30]

$$\rho(t) = (t+1)^2 \qquad \qquad \ldots (A45)$$

$$u(p) = \exp\left( -p - \frac{1}{p} \right) \qquad \qquad \ldots (A46)$$

$$R_s(p) = \frac{1}{s^2 p^2}\{\exp(-sp) - 1\}^2 \qquad \qquad \ldots (A47).$$

**23.** The inverse Laplace transform device according to claim 22, wherein said table forming unit and said inverse transform unit commonly include:

a general purpose register of K-bit length (K is a natural number),
a flag register storing a flag indicating whether a carry or a borrow occurred by an immediately preceding operation, and
an operator performing an operation dependent on whether or not a carry or a borrow occurred by the immediately preceding operation with reference to said flag; and
on a variable as an object of said numerical calculation, with a fraction of the variable being represented by multiple precision expression of K × N bits (N is a natural number not smaller than 2), and the fraction of said variable being divided K-bits by K-bits, using said general-purpose register, said operator performs an operation successively, starting from lower bit side.

24. The inverse Laplace transform device according to claim 22, wherein
said simultaneous equations are represented in the form of Ax = b, where A is a coefficient matrix having each element independent of t, x is a vector having solutions of the simultaneous equations as elements, and b is a vector having each element dependent on t;
said table forming unit calculates an inverse matrix $A^{-1}$ of said matrix A, and stores elements of said inverse matrix $A^{-1}$ in said storage, and
for every t in a calculation range, calculates solutions of said simultaneous equations, based on values of elements of said inverse matrix $A^{-1}$ stored in said storage.

25. The inverse Laplace transform device according to claim 22, wherein
said simultaneous equations are represented in the form of Ax = b, where A is a coefficient matrix having each element independent of t, x is a vector having solutions of the simultaneous equations as elements, and b is a vector having each element dependent on t;
said table forming unit decomposes said matrix A to a product of an upper triangular matrix and a lower triangular matrix, and stores elements of said upper triangular matrix and said lower triangular matrix in said storage, and
for every t in a calculation range, calculates solutions of said simultaneous equations, based on values of elements of said upper triangular matrix and said lower triangular matrix stored in said storage.

26. The inverse Laplace transform device according to claim 22, wherein said table forming unit calculates variables h, xj, pj, qj, aij and H(pj, t) in accordance with Equations (A48) to (A53) from said regularization parameter a, said mollifier parameter s and other parameters n, U and L

[Eq 31]

$$h = \frac{U - L}{n} \qquad \qquad \ldots (A48)$$

$$x_j = L + jh \qquad (j = 0, 1, 2, \cdots, n) \qquad \ldots (A49)$$

$$p_j = \exp\left(\frac{\pi}{2}\sinh x_j\right) \qquad (j = 0, 1, 2, \cdots, n) \qquad \ldots (A50)$$

$$q_j = p_j \cosh x_j \qquad (j = 0, 1, 2, \cdots, n) \qquad \ldots (A51)$$

$$a_{ij} = \frac{\pi}{2} h \frac{1}{(p_i + p_j)^3} \left\{ 1 + (p_i + p_j) + \frac{(p_i + p_j)^2}{2} \right\} \exp\left( -p_j - \frac{1}{p_j} \right) \dots (A52)$$

$$\begin{pmatrix} i = 0, 1, 2, \cdots, n \\ j = 0, 1, 2, \cdots, n \end{pmatrix}$$

$$H(p_j, t) = \frac{2}{p_j^3} \left[ 1 + p_j + \frac{p_j^2}{2} - \exp(-tp_j) \left\{ 1 + p_j(t+1) + \frac{p_j^2(t+1)^2}{2} \right\} \right]$$

$$\dots (A53)$$

$$(j = 0, 1, 2, \cdots, n, \quad t = t_0, t_1, \cdots, t_m)$$

said simultaneous equations are represented by Equation (A54),
said table forming unit performs Cholesky decomposition of a matrix A represented by Equation (A55) and calculates solutions of Equation (A54)

[Eq 32]

$$\begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \begin{pmatrix} H_0'^{n,a,t} \\ H_1'^{n,a,t} \\ H_2'^{n,a,t} \\ \vdots \\ H_n'^{n,a,t} \end{pmatrix} = \begin{pmatrix} H(p_0, t) \\ H(p_1, t) \\ H(p_2, t) \\ \vdots \\ H(p_n, t) \end{pmatrix}$$

$$\dots (A54)$$

$$A = \begin{pmatrix} a/q_0 + a_{00} & a_{01} & a_{02} & \cdots & a_{0n} \\ a_{10} & a/q_1 + a_{11} & a_{12} & \cdots & a_{1n} \\ a_{20} & a_{21} & a/q_2 + a_{22} & \cdots & a_{2n} \\ \vdots & \vdots & & \ddots & \vdots \\ a_{n0} & a_{n1} & a_{n2} & \cdots & a/q_n + a_{nn} \end{pmatrix} \quad \dots (A55)$$

said table forming unit further calculates, in accordance with Equation (A56), a numerical solution $\{H_i^{n,a,t}: i = 0, 1, 2, \dots, n\}$ of said integral equation of the second kind from the solutions of Equation (A54), and forms a table describing information including the numerical solution of said integral equation of the second kind

[Eq 33]

$$H_i^{\,n,a,t} = \frac{H_i^{\,m,a,t}}{q_i} \qquad (i = 0, 1, 2, \cdots, n) \qquad \ldots (A56);$$

and
said inverse transform unit calculates the numerical solution $f_{a,s}^{(n)}(t)$ of said original function from Laplace transform image $F(pj)$, in accordance with Equation (A57), with reference to said table

[Eq 34]

$$f_{a,s}^{(n)}(t) = \frac{\pi}{2} h \sum_{j=0}^{n} F(p_j) \frac{1}{s^2 p_j^2} \left\{ \exp(-sp_j) - 1 \right\}^2 p_j H_j^{\,n,a,t} p_j \cosh x_j \exp\left( -p_j - \frac{1}{p_j} \right)$$

$$\ldots (A57).$$

# FIG.1

Input: F(pi) ,n, a, L, U, s → INPUT UNIT (2)

INPUT UNIT (2) → (3) CPU:
- TABLE FORMING UNIT (4)
- INVERSE TRANSFORM UNIT (5)

INPUT UNIT → MAIN MEMORY (6):
- PROGRAM STORAGE (7)
- VARIABLE STORAGE (8)
- TRIANGULAR MATRIX STORAGE (9)
- H TABLE STORAGE (12)

REMOVABLE MEDIUM (99) → PROGRAM STORAGE (7)

CPU → OUTPUT UNIT (13) → DISPLAY (14)

(1) INVERSE LAPLACE TRANSFORM DEVICE

FIG.2

| $H0^{n,a,t0}$ | $H1^{n,a,t0}$ | $\bullet \bullet \bullet$ | $Hn^{n,a,t0}$ |
|---|---|---|---|
| $H0^{n,a,t1}$ | $H1^{n,a,t1}$ | $\bullet \bullet \bullet$ | $Hn^{n,a,t1}$ |
| $H0^{n,a,t2}$ | $H1^{n,a,t2}$ | $\bullet \bullet \bullet$ | $Hn^{n,a,t2}$ |
| $\vdots$ | $\vdots$ | $\bullet \bullet \bullet$ | $\vdots$ |
| $H0^{n,a,tm}$ | $H1^{n,a,tm}$ | $\bullet \bullet \bullet$ | $Hn^{n,a,tm}$ |

## FIG.3

START

INPUT PARAMETERS n, U, L, a — S101

CALCULATE $h = \dfrac{U-L}{n}$ — S102

CALCULATE $x_j = L + jh$ $(j=0,1,2,\cdots,n)$ — S103

CALCULATE $p_j = \exp(\dfrac{\pi}{2}\sinh x_j)$ $(j=0,1,2,\cdots,n)$ — S104

CALCULATE $q_j = p_j\cosh x_j$ — S105

CALCULATE $a_{ij} = \dfrac{\pi}{2}\dfrac{2}{(p_i+p_j)^3}\{1+(p_i+p_j)+\dfrac{(p_i+p_j)^2}{2}\}\exp(-p_j-\dfrac{1}{p_j})$ $(i=0,1,2,\cdots,n, j=0,1,2,\cdots,n)$ — S106

CALCULATE ELEMENTS OF MATRIX A $(i=0,1,2,\cdots,n, j=0,1,2,\cdots,n)$ IF $i=j$, $a+q_i a_{ij}$, IF $i \neq j$, $q_i a_{ij}$ — S107

LU DECOMPOSE MATRIX A, SAVE L, U — S108

$t = t_0$ — S109

CALCULATE $H(p_i,t) = \dfrac{2}{p_i^3}[1+p_i+\dfrac{p_i^2}{2}-\exp(-tp_i)\{1+p_i(t+1)+\dfrac{p_i^2(t+1)^2}{2}\}]$ $(i=0,1,2,\cdots,n)$ — S110

CALCULATE $\{H_i^{n,a,t}; i=0,1,2,\cdots,n\}$ BASED ON L, U — S111

$t = t+\Delta t$ — S114

SAVE $\{H_i^{n,a,t}; i=0,1,2,\cdots,n\}$ IN H TABLE — S112

$t = t_m$? — S113

NO

YES

END

## FIG.4

```
                    ( START )
                        │
        ┌───────────────────────────────┐
        │     INPUT PARAMETER s          │──── S200
        └───────────────────────────────┘
                        │
        ┌───────────────────────────────┐
        │          t = t0               │──── S201
        └───────────────────────────────┘
                        │
        ┌───────────────────────────────┐
        │       j = 0, SUM = 0          │──── S202
        └───────────────────────────────┘
                        │
        ┌───────────────────────────────┐
        │  READ Hj^{n,a,t} FROM H TABLE │──── S203
        │  READ pj, qj, h FROM VARIABLE STORAGE │
        └───────────────────────────────┘
                        │
        ┌───────────────────────────────┐
        │         INPUT F(pj)           │──── S204
        └───────────────────────────────┘
                        │
        ┌───────────────────────────────────────────────────┐
        │ CALCULATE SUM=SUM+ (π/2) hF(pj) (1/(s²pj²)) {exp(-spj)-1}²pjHj^{n,a,t}qj exp(-pj- 1/pj) │──── S205
        └───────────────────────────────────────────────────┘
                        │
  S207                  ▼                    S206
  ┌─────────┐   NO   ◇─────────────────◇
  │ j = j+1 │◄──────│      j = n ?      │
  └─────────┘        ◇─────────────────◇
                        │ YES
  S210                  ▼
  ┌─────────┐   ┌───────────────────────────────┐
  │ t = t+Δt│   │      fa,s^{(n)}(t) = SUM      │──── S208
  └─────────┘   └───────────────────────────────┘
       ▲                │
       │        NO      ▼                S209
       └───────────◇─────────────────◇
                   │     t = tm ?      │
                   ◇─────────────────◇
                        │ YES
                        ▼
                    ( END )
```

# FIG.5

INVERSE LAPLACE TRANSFORM DEVICE — 81

F(pi) ,n, a, L, U, s → INPUT UNIT — 2

CPU — 3
- TABLE FORMING UNIT — 84
- INVERSE TRANSFORM UNIT — 5

MAIN MEMORY — 6
- PROGRAM STORAGE — 7
- VARIABLE STORAGE — 8
- INVERSE MATRIX STORAGE — 89
- H TABLE STORAGE — 12

REMOVABLE MEDIUM — 99

OUTPUT UNIT — 13

DISPLAY — 14

EP 2 199 922 A1

## FIG.6

START

INPUT PARAMETERS n, U, L, a — S501

CALCULATE $h = \dfrac{U-L}{n}$ — S502

CALCULATE $x_j = L+jh$ $(j=0,1,2,\cdots,n)$ — S503

CALCULATE $p_j = \exp(\dfrac{\pi}{2}\sinh x_j)$ $(j=0,1,2,\cdots,n)$ — S504

CALCULATE $q_j = p_j \cosh x_j$ — S505

CALCULATE $a_{ij} = \dfrac{\pi}{2}\dfrac{2}{(p_i+p_j)^3}\{1+(p_i+p_j)+\dfrac{(p_i+p_j)^2}{2}\}\exp(-p_j-\dfrac{1}{p_j})$ $(i=0,1,2,\cdots,n, j=0,1,2,\cdots,n)$ — S506

CALCULATE ELEMENTS OF MATRIX A $(i=0,1,2,\cdots,n, j=0,1,2,\cdots,n)$
IF $i=j$, $a + q_i a_{ij}$, IF $i \neq j$, $q_i a_{ij}$ — S507

CALCULATE INVERSE MATRIX $A^{-1}$
OF MATRIX A, STORE $A^{-1}$ — S508

$t = t_0$ — S509

S510
CALCULATE $H(p_i,t) = \dfrac{2}{p_i^3}[1+p_i+\dfrac{p_i^2}{2}-\exp(-tp_i)\{1+p_i(t+1)+\dfrac{p_i^2(t+1)^2}{2}\}]$ $(i=0,1,2,\cdots,n)$

CALCULATE $\{H_i^{n,a,t}: i=0,1,2,\cdots,n\}$ BASED ON $A^{-1}$ — S511

S514
$t = t+\Delta t$

SAVE $\{H_i^{n,a,t}: i=0,1,2,\cdots,n\}$ IN H TABLE — S512

S513
NO — $t = t_m$?

YES

END

## FIG.7

```
                    START

INPUT PARAMETERS n, U, L, a                        — S301

CALCULATE h = (U−L)/n                              — S302

CALCULATE x_j = L+jh (j=0,1,2,···,n)               — S303

CALCULATE p_j = exp((π/2) sinh x_j) (j=0,1,2,···,n) — S304

CALCULATE q_j = p_j cosh x_j                       — S305

CALCULATE a_{ij} = (π/2) (2/(p_i+p_j)^3)[1+(p_i+p_j)+((p_i+p_j)^2/2)]exp(−p_j−(1/p_j))(i=0,1,2,···,n, j=0,1,2,···,n) — S306

CALCULATE ELEMENTS OF MATRIX A (i=0,1,2,···,n, j=0,1,2,···,n)   — S307
IF i = j, a + q_i a_{ij}, IF i ≠ j, q_i a_{ij}

CHOLESKY DECOMPOSE MATRIX A, SAVE L,L^T            — S308

t = t_0                                             — S309

                                                    ⌐ S310
CALCULATE H(p_i,t)=(2/p_i^3)[1+p_i+(p_i^2/2)−exp(−tp_i){1+p_i(t+1)+(p_i^2(t+1)^2/2)}](i=0,1,2,···,n)

CALCULATE {H_i'^{n.a.t.}: i=0,1,2,···,n} BASED ON L,L^T   — S311

CALCULATE H_i^{n.a.t}=H_i'^{n.a.t}/q_i (i=0,1,2,···,n)   — S312

t = t+Δt — S315          SAVE {H_i^{n.a.t.}: i=0,1,2,···,n} IN H TABLE   — S313

                                                    ⌐ S314
                      NO         t = t_m ?

                              ↓ YES
                             END
```

# FIG.8

| RAx(%rax) | R8(%r8) |
| 64 ——————— 0 | 64 ——————— 0 |
| RBx(%rbx) | R9(%r9) |
| 64 ——————— 0 | 64 ——————— 0 |
| RCx(%rcx) | R10(%r10) |
| 64 ——————— 0 | 64 ——————— 0 |
| RDx(%rdx) | R11(%r11) |
| 64 ——————— 0 | 64 ——————— 0 |
| RSI(%rsi) | R12(%r12) |
| 64 ——————— 0 | 64 ——————— 0 |
| RDI(%rdi) | R13(%r13) |
| 64 ——————— 0 | 64 ——————— 0 |
| RBP(%rbp) | R14(%r14) |
| 64 ——————— 0 | 64 ——————— 0 |
| RSP(%rsp) | R15(%r15) |
| 64 ——————— 0 | 64 ——————— 0 |

GROUP OF GENERAL PURPOSE REGISTERS

CONTROL UNIT 53

OPERATOR 54

FLAG REGISTER 57

CPU

# FIG.9

| 63 | 57 | 16 | 15 | 12 | 11 | 10 | 9 | 8 | 7 | 6 | 5 | 4 | 3 | 2 | 1 | 0 |
|----|----|----|----|----|----|----|---|---|---|---|---|---|---|---|---|---|
| | | | | | OF | DF | | | SF | ZF | | AF | | PF | | CF |

Reserved or System Flag

| Symbol | Description | Bit |
|--------|-------------|-----|
| OF | Overflow Flag | 11 |
| DF | Direction Flag | 10 |
| SF | Sign Flag | 7 |
| ZF | Zero Flag | 6 |
| AF | Auxiliary Carry Flag | 4 |
| PF | Parity Flag | 2 |
| CF | Carry Flag | 0 |

EP 2 199 922 A1

# FIG.10

(a)

$$(-1)^{\text{SIGN}} \times (\text{FRACTION})_{(2)} \times 2^{(\text{EXPONENT} - \text{bias})}$$

64n BITS

(b)

MSB                                                      LSB

FRACTION = 00···001  00···101  10···011  ·············· 01···011  00···111

64 BITS    64 BITS    64 BITS               64 BITS    64 BITS

a[0]         a[1]         a[2]                 a[n-2]      a[n-1]

(c)

a[0]   | 00   ···   001 |

MSB    64 BITS    LSB

a[1]   | 00   ···   101 |

MSB    64 BITS    LSB

a[2]   | 10   ···   011 |

MSB    64 BITS    LSB

a[n-2]   | 01   ···   011 |

MSB    64 BITS    LSB

a[n-1]   | 00   ···   111 |

MSB    64 BITS    LSB

# FIG.11

```
/* Execute c=a+b. a, b, c are arrays of length n*/
/* Call from C language by add(c,a,b,n);*/

.add:


    xorq %rax, %rax               /* initialize CF */


.add_loop:                        /* repeat until counter i in register %rcx
                                     counts from n to 1 */
    movq -8(%rsi, %rcx, 8), %r8    /* load register %r8 with a[i-1] */
    movq -8(%rdx, %rcx, 8), %r10   /* load register %r10 with b[i-1] */
*   adcq %r8, %r10                 /* addition with carry */
    movq %r10, -8(%rdi, %rcx, 8)   /* save result in c[i] */
    decq %rcx                      /* decrease counter i by 1 */
    jnz .add_loop                  /* exit loop if counter i = 0 */


    adcq $0, %rax              /* register %rax holds carry at MSB */
                               /* optional */

    ret
```

## FIG.12

```
        /* Execute c=a+b. a, b, c are arrays of length n*/
        /* Call from C language by add(c,a,b,n);*/

add:

        s8addq $19, $17, $17    /* calculate address of a[n] */
        s8addq $19, $18, $18    /* calculate address of b[n] */
        s8addq $19, $16, $16    /* calculate address of c[n] */

        xor $0, $0, $0          /* use $0 as CF */

$add_loop:                      /* repeat until i counts from n to 1 */
        ldq $1, -8($17)         /* load register $1 with a[i-1] */
        ldq $2, -8($18)         /* load register $2 with b[i-1] */

*       addq $1, $2, $5         /* store sum a[i-1] + b[i-1] in $5 */
*       cmpult $5, $2, $23      /* determine if carry occurred */

*       addq $5, $0, $6         /* add last carry to sum */
*       cmpult $6, $0, $0       /* determine if carry occurred in
                                   immediately preceding addition */
        stq $6, -8($16)         /* store result of summation in memory */
*       or $0, $23, $0          /* integrate results of two carry
                                   determinations */
        subq $17, 8, $17        /* calculate address of a[i-2] */
        subq $18, 8, $18        /* calculate address of b[i-2] */
        subq $16, 8, $16        /* calculate address of c[i-2] */

        subq $19, 1, $19        /* decrease counter by 1 */
        bgt $19, $add_loop

                /* register $0 holds carry at MSB */

        ret $31, ($26), 1
```

# FIG.13

```
.sub:

        xorq %rax, %rax                    /* initialize CF */


.sub_loop:                                 /* repeat until counter i in register %rcx
                                              counts from n to 1 */
        movq -8(%rsi, %rcx, 8), %r8        /* load register %r8 with a[i-1] */
        movq -8(%rdx, %rcx, 8), %r10       /* load register %r10 with b[i-1] */
*       sbbq %r8, %r10                      /* subtraction with borrow */
        movq %r10, -8(%rdi, %rcx, 8)       /* save result in c[i] */
        decq %rcx                          /* decrease counter i by 1 */
        jnz .sub_loop                      /* exit loop if counter i = 0 */

        adcq $0, %rax          /* register %rax holds borrow at MSB */
                              /* optional */
        ret
```

/* Execute c=a-b. a, b, c are arrays of length n*/
/* Call from C language by sub(c,a,b,n);*/

EP 2 199 922 A1

## FIG.14

```
/* Execute c=a-b. a, b, c are arrays of length n*/
/* Call from C language by sub(c,a,b,n);*/

sub:

    s8addq $19, $17, $17          /* calculate address of a[n] */
    s8addq $19, $18, $18          /* calculate address of b[n] */
    s8addq $19, $16, $16          /* calculate address of c[n] */

    xor $0, $0, $0                /* use $0 as CF */

$sub_loop:                        /* repeat until i counts from n to 1 */
    ldq $1, -8($17)               /* load register $1 with a[i-1] */
    ldq $2, -8($18)               /* load register $2 with b[i-1] */

*   subq $1, $2, $5              /* store difference a[i-1] - b[i-1] in $5 */
*   cmpult $1, $2, $6            /* determine if borrow occurred */

*   subq $5, $0, $7             /* subtract last borrow from difference */
*   cmpult $5, $0, $0           /* determine if borrow occurred in
                                     immediately preceding subtraction */
    stq $7, -8($18)
*   or $0, $6, $0

    subq $17, 8, $17             /* calculate address of a[i-2] */
    subq $18, 8, $18             /* calculate address of b[i-2] */
    subq $16, 8, $16             /* calculate address of c[i-2] */

    subq $19, 1, $19             /* decrease counter by 1 */
    bgt $19, $Lsub_loop

                    /* register $0 holds borrow at MSB */

    ret $31, ($26), 1
```

FIG.15

FIG.16

```
/* Execute C = A×B */
/* input : n integer */
/* input: A[0]···A[n-1] array of length n*/
/* input: B[0]···B[n-1] array of length n*/
/* output: C_Z integer */
/* output: C[0]···C[n-1] array of length n */

long mul(unsigned long *const C,
        const unsigned long *const A, const unsigned long *const B,
        const long n)
{
    long C'[2n];
    long i;

    i=n-1;
    for (i=n-1; i>=0; i--)
        mul_add(&(C'[i]), A, &(B[i]), n-i);

    for (i=0; i<n; i++)
        C[i]=C'[i];

    return C'[0];
}
```

FIG.17

## FIG.18

```
/* Calculate c = c+ a*b. c, a are arrays, b an integer */
/* input/output: %rdi = pointer to augend c, c is an array having element number n+1 */
/* input: %rsi = pointer to multiplicand a, a is an array having element number n */
/* input: %rdx = multiplier b, integer */
/* input: %rcx = array element number n, integer */

mul_add:
        xorq %r9, %r9           /* use for carry process */
        movq %rdx, %r8          /* save value b */

.loop:                          /* repeat until counter i in register %rcx counts from n to 1 */
        movq -8(%rsi, %rcx,8), %rax     /* load register %rax with a[i-1] */
        mulq %r8                /* calculate product of %rax (=a[i-1]) and %r8 (=b) */
                                /* upper bits of product in %rdx, lower bits in %rax */

        addq %r9, %rdx          /* add last carry to present product */
        addq %rax, 0(%rdi, %rcx, 8)     /* add lower bits of product a[i-1]*b to c[i] */
        movq $0, %r9            /* set flag for carry process to 0 */
        adcq %rdx, -8(%rdi, %rcx, 8)    /* add upper bits of product a[i-1]*b to c[i-1] */
        adcq $0, %r9            /* bring carry to next loop */

        decq %rcx               /* decrease counter by 1 */
        jnz .mul1_loop          /* repeat if counter > 0 */

        ret
```

EP 2 199 922 A1

## FIG.19

```
/* Calculate c = c+ a*b. c, a are arrays, b an integer */
/* input/output: $16 = pointer to augend c, c is an array having
      element number n+1 */
/* input: $17 = pointer to multiplicand a, a is an array having
      element number n */
/* input: $18 = multiplier b, integer */
/* input: $19 = array element number n, integer */

mul_add:
    xorq $23, $23, $23      /* use for carry process */
    s8addq $19, $16, $16    /* calculate address of c[n] */
    s8addq $19, $17, $17    /* calculate address of a[n] */

$loop:                      /* repeat until i counts from n to 1 */
    ldq $1, -8($17)         /* load register $1 with a[i-1] */
    ldq $21, 0($16)         /* load register $21 with c[i] */
    ldq $20, -8($16)        /* load register $20 with c[i-1] */

    mulq $1, $18, $2        /* calculate lower 64 bits of a[i-1]*b */
    umulh $1, $18, $1       /* calculate upper 64 bits of a[i-1]*b */

    addq $1, $23, $1        /* add last carry to product */

    addq $21, $2, $21       /* add lower bits of product to c[i] */
    cmpult $21, $2, $2      /* check carry in addition */

    addq $20, $1, $20       /* add upper bits of product to c[i-1] */
    cmpult $20, $1, $1      /* check carry in addition */

    addq $20, $2, $20       /* add carry to c[i-1] */
    cmpult $20, $2, $2      /* check carry in addition */

    stq $21, 0($16)         /* store calculated c[i] */
    stq $20, -8($16)        /* store calculated c[i-1] */
    orq $1, $2, $23         /* bring carry in upper bits to next loop */

    subq $17, 8, $17        /* calculate address of a[i-2] */
    subq $16, 8, $16        /* calculate address of c[i-2] */

    subq $19, 1, $19        /* decrease counter by 1 */
    bgt $19, $loop          /* repeat if counter > 0 */

    ret $31, ($26), 1
```

## FIG.20

```
/* Execute C=A/B */
/* input: n integer */
/* input: assume A, array of element number n, dividend, A[0] =1 */
/* input: assume B, array of element number n, divisor, B[0] = 1 */
/* output: Q_Z integer, integer part of quotient a/b */
/* output: C, array of element number n, fraction part of quotient a/b */
program is implemented, using subroutines mul, sub, cmp, as follows */
long div(unsigned long *const C,
        const unsigned long *const A, const unsigned long *const B,
        const long n)
{
    unsined long B'[2n], T[2n], Q[2n], X[2n];
    long i;

    for(i=0; i<n; i++)
        B'[i]=B[i];
    for(i=n; i<2n; i++)
        B'[i]=0;

    T[0]=2;
    for(i=1; i<2n; i++)
        T[i]=0;

    X[0]=1;
    for(i=1; i<2n; i++)
        X[i]=0;

    while(1) {
*       mul(Q, B', X, 2n);
*       sub(Q, T, Q, 2n);
*       mul(Q, Q, X, 2n);

        if(cmp(Q, X, 2n) ==n)
            break;

        for(i=0; i<2n; i++)
            X[i]=Q[i];
    }

*       mul(Q, A, X, n);

        for(i=0; i<n; i++)
            C[i]=Q[i+2];

        return Q[1];
}
```

FIG.21

```
/* cmp subroutine: from arrays a, b, return number of matching elements
    from starting element */
/* input: n integer */
/* input: a[0] ··· a[n-1] array of length n */
/* input: b[0] ··· b[n-1] array of length n */
/* output: integer, number of matching elements from starting element */

long cmp(const unsigned long *const a, const unsigned long *const b,
          const long n)

{
    long i;
    for(i=0; i<n; i++)
        if(a[i] !=b[i]) return i;
    return n;
}
```

FIG.22

(a)

(b)

EP 2 199 922 A1

FIG.23

(a)

(b)

# FIG.24

DEVICE FOR FORMING INVERSE LAPLACE TRANSFORM TABLE

71

FIG.25

F(pi), s → INPUT UNIT (72)

INVERSE TRANSFORM UNIT (5)

CPU (73)

MAIN MEMORY (74)

PROGRAM STORAGE (75)

h,pi,qi → VARIABLE STORAGE (76)

REMOVABLE MEDIUM (77)

$H_i^{n,a,t}$ → H TABLE STORAGE (12)

OUTPUT UNIT (13)

DEVICE FOR CALCULATING NUMERICAL SOLUTION OF INVERSE LAPLACE TRANSFORM

DISPLAY (14)

(71)

<div align="center">

**INTERNATIONAL SEARCH REPORT**

</div>

| | International application No. |
|---|---|
| | PCT/JP2008/064453 |

| A. CLASSIFICATION OF SUBJECT MATTER |
|---|
| G06F17/14(2006.01)i |
| |
| According to International Patent Classification (IPC) or to both national classification and IPC |

| B. FIELDS SEARCHED |
|---|
| Minimum documentation searched (classification system followed by classification symbols) |
| G06F17/14 |
| |
| Documentation searched other than minimum documentation to the extent that such documents are included in the fields searched |
| Jitsuyo Shinan Koho    1922-1996   Jitsuyo Shinan Toroku Koho  1996-2008 |
| Kokai Jitsuyo Shinan Koho  1971-2008   Toroku Jitsuyo Shinan Koho  1994-2008 |
| Electronic data base consulted during the international search (name of data base and, where practicable, search terms used) |
| |

| C. DOCUMENTS CONSIDERED TO BE RELEVANT |

| Category* | Citation of document, with indication, where appropriate, of the relevant passages | Relevant to claim No. |
|---|---|---|
| A | MATSUURA et al., "Numerical real inversion formulas of the Laplace transform by using a Fredholm integral equation of the second kind", Suri Kaiseki Kenkyusho Kokyuroku, Vol.1566, Research Institute for Mathematical Sciences, Kyoto University, 2007.07, pages 52 to 63 | 1-26 |
| A | Kazuo AMANO, Saburo SAITO, Syarif Admi, "A Real Inversion Formula for the Laplace Transform in a Sobolev Space", Suri Kaiseki Kenkyusho Kokyuroku, Vol.1067, Research Institute for Mathematical Sciences, Kyoto University, 1998.10, pages 141 to 149 | 1-26 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 November, 2008 (06.11.08) | 18 November, 2008 (18.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/064453

C (Continuation).    DOCUMENTS CONSIDERED TO BE RELEVANT

| Category* | Citation of document, with indication, where appropriate, of the relevant passages | Relevant to claim No. |
|---|---|---|
| A | Shinzo KITAMURA, Kei URA, Katsumi TANAKA, "Neural Network ni yoru Dai Isshu Fredholm Sekibun Hoteishiki no Kaiho", Dai 38 Kai (Showa 64 Nen Zenki) Proceedings of the National Meeting of Information Processing Society of Japan, Information Processing Society of Japan, 15 March, 1989 (15.03.89), pages 92 to 93 | 1-26 |
| A | Shigeyoshi OGAWA, "Hi Ingateki Kakuritsu Sekibun Hoteishiki to sono Suchi Kaiho ni Tsuite", Suri Kaiseki Kenkyusho Kokyuroku, Vol.1127, Research Institute for Mathematical Sciences, Kyoto University, 2000.01, pages 171 to 178 | 1-26 |

Form PCT/ISA/210 (continuation of second sheet) (April 2007)

**EP 2 199 922 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Matsuura et al.** Numerical Real Inversion Formulas of the Laplace Transform by Using a Fredholm Integral Equation of the Second Kind. *Mathematical Society of Japan, Annual Meeting 2007, Division of Applied Mathematics,* 2007, 69-72